# EUROPEAN PATENT SPECIFICATION

(11) **EP 3 396 990 B1**
(45) Date of publication and mention of the grant of the patent: **12.02.2020**
(21) Application number: 16885960.1
(22) Date of filing: 30.06.2016
(51) Int. Cl.: H04W 8/12, H04W 4/40, H04W 76/15, H04W 76/12, H04W 76/16

(54) **ROUTING RULE TRANSMISSION METHODS AND DEVICES**
VERFAHREN UND VORRICHTUNGEN ZUR ÜBERTRAGUNG VON ROUTINGREGELN
PROCÉDÉS ET DISPOSITIVES DE TRANSMISSION DE RÈGLES D'ACHEMINEMENT

(30) Priority: 19.01.2016 WO PCT/CN2016/071388
(43) Date of publication of application: 31.10.2018
(73) Proprietor: Huawei Technologies Co., Ltd., Longgang District Shenzhen, Guangdong 518129 (CN)
(72) Inventor: LI, Huan, Shenzhen Guangdong 518129 (CN); YU, Youyang, Shenzhen Guangdong 518129 (CN)
(74) Representative: Körber, Martin Hans
(86) International application number: PCT/CN2016/087949
(87) International publication number: WO 2017/124698

(56) References cited:
- CN-A- 101 516 085
- CN-A- 102 655 665
- CN-A- 103 108 401
- US-A1- 2010 014 517
- US-A1- 2015 382 393
- "3rd Generation Partnership Project; Technical Specification Group Core Network and Terminals; Network-Based IP Flow Mobility (NBIFOM); Stage 3 (Release 13)", 3GPP STANDARD; 3GPP TS 24.161, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V1.0.0, 18 December 2015 (2015-12-18), pages 1-29, XP051047030, [retrieved on 2015-12-18]
- "3rd Generation Partnership Project; Technical Specification Group Services and System Aspects; Network-Based IP Flow Mobility (NBIFOM); Stage 2 (Release 13)", 3GPP DRAFT; 23161-D10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 15 December 2015 (2015-12-15), XP051071869, Retrieved from the Internet: URL:http://www.3gpp.org/ftp/tsg_sa/WG2_Arc h/Latest_SA2_Specs/Rel-13/ [retrieved on 2015-12-15]

## Description

### TECHNICAL FIELD

Embodiments of the present invention relate to the field of communications technologies, and in particular, to methods and apparatuses for routing rule transmission.

### BACKGROUND

Currently, a 3GPP standard protocol supports a terminal in simultaneously accessing a 3GPP network and a non-3GPP network. In addition, the terminal can access a same packet data network (English: Packet Data Network, PDN for short) connection through the 3GPP network and the non-3GPP network simultaneously, that is, the terminal can access a same packet data network gateway (English: Packet Data Network Gateway, PGW for short) simultaneously. In this way, different traffic flows in the same PDN connection may be distributed in the 3GPP network and the non-3GPP network, so that an objective of routing traffic flows between the terminal and the same PGW and properly using network resources is achieved. When the PGW supports the GPRS Tunneling Protocol (English: GPRS Tunneling Protocol, GTP for short) or the Proxy Mobile IP (English: Proxy Mobile IP, PMIP for short) protocol, the foregoing feature of routing different traffic flows in the same PDN connection in the 3GPP network and the non-3GPP network is referred to as network based IP flow mobility (English: Network Based IP Flow Mobility, NBIFOM for short). NBIFOM modes may be classified into a network-initiated NBIFOM mode and a terminal-initiated NBIFOM mode. In the network-initiated NBIFOM mode, a routing rule for a traffic flow is determined by a network. In the terminal-initiated NBIFOM mode, a routing rule for a traffic flow is determined by the terminal. For example, in the network-initiated NBIFOM mode, the terminal may send an NBIFOM request to a network in any one of the following cases: The terminal requests to transmit some traffic flows in an access network; the terminal needs to report to the network when detecting that an access network is available or unavailable; or the terminal needs to send a radio access network (English: Radio Access Network, RAN for short) rule indication (including transfer from a wireless local area network (English: Wireless Local Area Network, WLAN for short) or transfer to a WLAN) to the network.

In the prior art, when the terminal sends an NBIFOM request in the network-initiated NBIFOM mode, a routing rule transmission mode is as follows: The terminal sends a modify packet data protocol (English: Packet Data Protocol, PDP for short) context request to an intermediate network node (for example, a serving GPRS support node (English: Serving GPRS Support Node, SGSN for short)). The intermediate network node obtains a routing rule from a gateway device (for example, the PGW) according to the modify PDP context request sent by the terminal, and sends the routing rule to the terminal, and the routing rule transmission process ends. Then the network transmits a traffic flow according to the routing rule sent to the terminal.

However, if the terminal cannot enforce the routing rule after receiving the routing rule sent by the network, the traffic flow corresponding to the routing rule cannot be transmitted correctly.

The document US 2015/0382393 A1 shows a method and apparatus for supporting network-based IP flow mobility via multiple wireless accesses for a wireless device. Especially, the document shows NBIFOM negotiations between devices for settling on routing rules.

The document "3rd Generation Partnership Project; Technical Specification Group Core Network and Terminals; Network-Based IP Flow Mobility (NBIFOM); Stage 3 (Release 13)", 3GPP TS 24.161, V1.0.0, publication date 18.12.2015, is a standardization document of the 3GPP standard. It is concerned with NBIFOM routing rule negotiations.

The document "3rd Generation Partnership Project; Technical Specification Group Services and System Aspects; Network-Based IP Flow Mobility (NBIFOM); Stage 2 (Release 13)", 3GPP TS 23.161, V13.1.0, publication date 15.12.2015, is a standardization document of the 3GPP standard. Also, this document is concerned with NBIFOM routing rule negotiations.

### SUMMARY

The present invention is defined by a method for routing rule transmission according to independent claims 1 and 6, an intermediate network device according to independent claim 7, and a gateway device according to independent claim 11.

According to a first aspect, an embodiment of the present invention provides a method for routing rule transmission, where the method includes: sending, by a terminal, an NBIFOM routing rule request to an intermediate network device, where the NBIFOM routing rule request includes a routing rule generation parameter; receiving K routing rules sent by the intermediate network device, where K is an integer greater than or equal to 1; and sending routing rule acknowledgement indication information to the intermediate network device, where the routing rule acknowledgement indication information includes at least one of the following: identifiers of M routing rules acknowledged by the terminal in the K routing rules and identifiers of N rejected routing rules, where a sum of M and N is equal to K. This ensures consistency of routing rules used by a gateway device and the terminal, and ensures correct transmission of a traffic flow.

According to the first aspect, in a first possible implementation of the first aspect, before the sending, by a terminal, an NBIFOM routing rule request to an intermediate network device, the method further includes: in a process of establishing a PDN connection between the terminal and a gateway device, sending, by the terminal, a PDN connection establishment request to the gateway device through the intermediate network device, where the PDN connection establishment request carries an NBIFOM mode indication, and the NBIFOM mode indication is used to indicate that a current NBIFOM mode is a network-initiated NBIFOM mode or a terminal-initiated NBIFOM mode, so that the intermediate network device records the current NBIFOM mode. According to a second aspect, an embodiment of the present invention provides a method for routing rule transmission, where the method includes: receiving, by an intermediate network device, an NBIFOM routing rule request sent by a terminal, and sending the NBIFOM routing rule request to a gateway device, where the NBIFOM routing rule request includes a routing rule generation parameter; receiving K routing rules that are generated by the gateway device according to the NBIFOM routing rule request, and sending the K routing rules to the terminal, where K is an integer greater than or equal to 1; and receiving routing rule acknowledgement indication information sent by the terminal, and sending the routing rule acknowledgement indication information to the gateway device, where the routing rule acknowledgement indication information includes at least one of the following: identifiers of M routing rules acknowledged by the terminal in the K routing rules and identifiers of N rejected routing rules, where a sum of M and N is equal to K. This ensures consistency of routing rules used by the gateway device and the terminal, and ensures correct transmission of a traffic flow.

According to the second aspect, in a first possible implementation of the second aspect, after the receiving, by an intermediate network device, an NBIFOM routing rule request sent by a terminal, the method further includes: sending a routing rule timing instruction to the gateway device; and
after the receiving, by the intermediate network device, K routing rules that are generated by the gateway device according to the routing rule request, the method further includes: sending a routing rule reception response to the gateway device; where
the routing rule timing instruction is used to instruct the gateway device to: start timing when the gateway device receives the routing rule reception response, and determine an enforceable routing rule according to the routing rule acknowledgement indication information if the routing rule acknowledgement indication information is received before a timing time reaches the preset time, or determine the K routing rules as enforceable routing rules if the routing rule acknowledgement indication information is not received before a timing time reaches the preset time.

According to the second aspect or the first possible implementation of the second aspect, in a second possible implementation of the second aspect, before the sending, by the intermediate network device, the K routing rules to the terminal, the method further includes: determining that the NBIFOM routing rule request is sent by the terminal in a network-initiated NBIFOM mode.

According to the second possible implementation of the second aspect, in a third possible implementation of the second aspect, before the receiving, by an intermediate network device, an NBIFOM routing rule request sent by a terminal, the method further includes: in a process of establishing a PDN connection between the terminal and the gateway device, receiving a PDN connection establishment request sent by the terminal to the gateway device, where the PDN connection establishment request includes an NBIFOM container, and the NBIFOM container carries an NBIFOM mode indication; or receiving a PDN connection establishment response sent by the gateway device to the terminal, where the PDN connection establishment response includes an NBIFOM container, and the NBIFOM container carries an NBIFOM mode indication; where the NBIFOM mode indication is used to indicate that a current NBIFOM mode is the network-initiated NBIFOM mode or a terminal-initiated NBIFOM mode;
parsing the NBIFOM container to obtain the NBIFOM mode indication; and recording the current NBIFOM mode according to the NBIFOM mode indication; and
the determining, by the intermediate network device, that the NBIFOM routing rule request is sent by the terminal in a network-initiated NBIFOM mode includes: determining, according to the current NBIFOM mode recorded as the network-initiated NBIFOM mode, that the NBIFOM routing rule request is sent by the terminal in the network-initiated NBIFOM mode.

According to the second possible implementation of the second aspect, in a fourth possible implementation of the second aspect, before the receiving, by an intermediate network device, an NBIFOM routing rule request sent by a terminal, the method further includes: in a process of establishing a PDN connection between the terminal and the gateway device, receiving a PDN connection establishment request sent by the terminal to the gateway device, where the PDN connection establishment request carries an NBIFOM mode indication; or receiving a PDN connection establishment response sent by the gateway device to the terminal, where the PDN connection establishment response carries an NBIFOM mode indication; where the NBIFOM mode indication is used to indicate that a current NBIFOM mode is the network-initiated NBIFOM mode or a terminal-initiated NBIFOM mode; and
recording the current NBIFOM mode according to the NBIFOM mode indication; and
the determining, by the intermediate network device, that the NBIFOM routing rule request is sent by the terminal in a network-initiated NBIFOM mode includes: determining, according to the current NBIFOM mode recorded as the network-initiated NBIFOM mode, that the NBIFOM routing rule request is sent by the terminal in the network-initiated NBIFOM mode.

According to the second possible implementation of the second aspect, in a fifth possible implementation of the second aspect, the NBIFOM routing rule request further includes a first indication, and the first indication is used to indicate whether a current access network is available to the terminal, or used to indicate that a traffic flow of the terminal in the current corresponding access network needs to be transferred from an RAN to a WLAN or from a WLAN to an RAN, or used to indicate that a type of the NBIFOM routing rule request is a traffic flow mapping request; and
the determining, by the intermediate network device, that the NBIFOM routing rule request is sent by the terminal in a network-initiated NBIFOM mode includes: determining, according to the first indication, that the NBIFOM routing rule request is sent by the terminal in the network-initiated NBIFOM mode.

According to a third aspect, an embodiment of the present invention provides a method for routing rule transmission, where the method includes: receiving, by a gateway device, an NBIFOM routing rule request sent by an intermediate network device, where the NBIFOM routing rule request includes a routing rule generation parameter; generating K routing rules according to the NBIFOM routing rule request, where K is an integer greater than or equal to 1; sending the K routing rules to the intermediate network device; receiving routing rule acknowledgement indication information sent by the intermediate network device, where the routing rule acknowledgement indication information includes at least one of the following: identifiers of M routing rules acknowledged by a terminal in the K routing rules and identifiers of N rejected routing rules, where a sum of M and N is equal to K; and determining, according to the routing rule acknowledgement indication information, the N routing rules rejected by the terminal in the K routing rules. This ensures consistency of routing rules used by the gateway device and the terminal, and ensures correct transmission of a traffic flow.

According to the third aspect, in a first possible implementation of the third aspect, after the receiving, by a gateway device, an NBIFOM routing rule request sent by an intermediate network device, the method further includes: receiving a routing rule timing instruction sent by the intermediate network device;
after the sending, by the gateway device, the K routing rules to the intermediate network device, the method further includes: receiving a routing rule reception response sent by the intermediate network device; and starting timing according to the routing rule timing instruction when receiving the routing rule reception response; and
the receiving, by the gateway device, routing rule acknowledgement indication information sent by the intermediate network device includes: receiving the routing rule acknowledgement indication information before a timing time reaches a preset time.

According to the first possible implementation of the third aspect, in a second possible implementation of the third aspect, the method further includes: if the gateway device does not receive the routing rule acknowledgement indication information before the timing time reaches the preset time, determining that the K routing rules are enforceable routing rules.

According to the third aspect or the first possible implementation of the third aspect or the second possible implementation of the third aspect, in a third possible implementation of the third aspect, before the receiving, by a gateway device, an NBIFOM routing rule request sent by an intermediate network device, the method further includes: in a process of establishing a PDN connection between the gateway device and the terminal, sending a PDN connection establishment response to the terminal through the intermediate network device, where the PDN connection establishment response carries an NBIFOM mode indication, and the NBIFOM mode indication is used to indicate that a current NBIFOM mode is a network-initiated NBIFOM mode or a terminal-initiated NBIFOM mode, so that the intermediate network device records the current NBIFOM mode.

According to a fourth aspect, an embodiment of the present invention provides a terminal, including: a sending unit, configured to send an NBIFOM routing rule request to an intermediate network device, where the NBIFOM routing rule request includes a routing rule generation parameter; and a receiving unit, configured to receive K routing rules sent by the intermediate network device, where K is an integer greater than or equal to 1; where the sending unit is further configured to send routing rule acknowledgement indication information to the intermediate network device, where the routing rule acknowledgement indication information includes at least one of the following: identifiers of M routing rules acknowledged by the terminal in the K routing rules and identifiers of N rejected routing rules, where a sum of M and N is equal to K.

According to a fourth aspect, in a first possible implementation of the fourth aspect, before sending the NBIFOM routing rule request to the intermediate network device, the sending unit is further configured to: in a process of establishing a PDN connection between the terminal and a gateway device, send a PDN connection establishment request to the gateway device through the intermediate network device, where the PDN connection establishment request carries an NBIFOM mode indication, and the NBIFOM mode indication is used to indicate that a current NBIFOM mode is a network-initiated NBIFOM mode or a terminal-initiated NBIFOM mode, so that the intermediate network device records the current NBIFOM mode.

According to a fifth aspect, an embodiment of the present invention provides an intermediate network device, including: a receiving unit, configured to receive an NBIFOM routing rule request sent by a terminal, where the NBIFOM routing rule request includes a routing rule generation parameter; and a sending unit, configured to send the NBIFOM routing rule request to a gateway device; where the receiving unit is further configured to receive K routing rules that are generated by the gateway device according to the NBIFOM routing rule request, where K is an integer greater than or equal to 1; the sending unit is further configured to send the K routing rules to the terminal; the receiving unit is further configured to receive routing rule acknowledgement indication information sent by the terminal, where the routing rule acknowledgement indication information includes at least one of the following: identifiers of M routing rules acknowledged by the terminal in the K routing rules and identifiers of N rejected routing rules, where a sum of M and N is equal to K; and the sending unit is further configured to send the routing rule acknowledgement indication information to the gateway device. This ensures consistency of routing rules used by the gateway device and the terminal, and ensures correct transmission of a traffic flow.

According to the fifth aspect, in a first possible implementation of the fifth aspect, after the receiving unit receives the NBIFOM routing rule request sent by the terminal, the sending unit is further configured to send a routing rule timing instruction to the gateway device; and after the receiving unit receives the K routing rules that are generated by the gateway device according to the routing rule request, the sending unit is further configured to send a routing rule reception response to the gateway device; where the routing rule timing instruction is used to instruct the gateway device to: start timing when the gateway device receives the routing rule reception response, and determine an enforceable routing rule according to the routing rule acknowledgement indication information if the routing rule acknowledgement indication information is received before a timing time reaches the preset time, or determine the K routing rules as enforceable routing rules if the routing rule acknowledgement indication information is not received before a timing time reaches the preset time.

According to the fifth aspect or the first possible implementation of the fifth aspect, in a second possible implementation of the fifth aspect, the intermediate network device further includes: a processing unit, configured to determine, before the sending unit sends the K routing rules to the terminal, that the NBIFOM routing rule request is sent by the terminal in a network-initiated NBIFOM mode.

According to the second possible implementation of the fifth aspect, in a third possible implementation of the fifth aspect, before receiving the NBIFOM routing rule request sent by the terminal, the receiving unit is further configured to: in a process of establishing a PDN connection between the terminal and the gateway device, receive a PDN connection establishment request sent by the terminal to the gateway device, where the PDN connection establishment request includes an NBIFOM container, and the NBIFOM container carries an NBIFOM mode indication; or receive a PDN connection establishment response sent by the gateway device to the terminal, where the PDN connection establishment response includes an NBIFOM container, and the NBIFOM container carries an NBIFOM mode indication; where the NBIFOM mode indication is used to indicate that a current NBIFOM mode is the network-initiated NBIFOM mode or a terminal-initiated NBIFOM mode; the processing unit is further configured to parse the NBIFOM container to obtain the NBIFOM mode indication, and record the current NBIFOM mode according to the NBIFOM mode indication; and when determining that the NBIFOM routing rule request is sent by the terminal in the network-initiated NBIFOM mode, the processing unit is specifically configured to determine, according to the current NBIFOM mode recorded as the network-initiated NBIFOM mode, that the NBIFOM routing rule request is sent by the terminal in the network-initiated NBIFOM mode.

According to the second possible implementation of the fifth aspect, in a fourth possible implementation of the fifth aspect, before receiving the NBIFOM routing rule request sent by the terminal, the receiving unit is further configured to: in a process of establishing a PDN connection between the terminal and the gateway device, receive a PDN connection establishment request sent by the terminal to the gateway device, where the PDN connection establishment request carries an NBIFOM mode indication; or receive a PDN connection establishment response sent by the gateway device to the terminal, where the PDN connection establishment response carries an NBIFOM mode indication; where the NBIFOM mode indication is used to indicate that a current NBIFOM mode is the network-initiated NBIFOM mode or a terminal-initiated NBIFOM mode; the processing unit is further configured to record the current NBIFOM mode according to the NBIFOM mode indication; and when determining that the NBIFOM routing rule request is sent by the terminal in the network-initiated NBIFOM mode, the processing unit is specifically configured to determine, according to the current NBIFOM mode recorded as the network-initiated NBIFOM mode, that the NBIFOM routing rule request is sent by the terminal in the network-initiated NBIFOM mode.

According to the second possible implementation of the fifth aspect, in a fifth possible implementation of the fifth aspect, the NBIFOM routing rule request further includes a first indication, and the first indication is used to indicate whether a current access network is available to the terminal, or used to indicate that a traffic flow of the terminal in the current corresponding access network needs to be transferred from an RAN to a WLAN or from a WLAN to an RAN, or used to indicate that a type of the NBIFOM routing rule request is a traffic flow mapping request; and when determining that the NBIFOM routing rule request is sent by the terminal in the network-initiated NBIFOM mode, the processing unit is specifically configured to determine, according to the first indication, that the NBIFOM routing rule request is sent by the terminal in the network-initiated NBIFOM mode.

According to a sixth aspect, an embodiment of the present invention provides a gateway device, including: a receiving unit, configured to receive an NBIFOM routing rule request sent by an intermediate network device, where the NBIFOM routing rule request includes a routing rule generation parameter; a processing unit, configured to generate K routing rules according to the NBIFOM routing rule request, where K is an integer greater than or equal to 1; and a sending unit, configured to send the K routing rules to the intermediate network device; where the receiving unit is further configured to receive routing rule acknowledgement indication information sent by the intermediate network device, where the routing rule acknowledgement indication information includes at least one of the following: identifiers of M routing rules acknowledged by a terminal in the K routing rules and identifiers of N rejected routing rules, where a sum of M and N is equal to K; and the processing unit is further configured to determine, according to the routing rule acknowledgement indication information, the N routing rules rejected by the terminal in the K routing rules. This ensures consistency of routing rules used by the gateway device and the terminal, and ensures correct transmission of a traffic flow.

According to the sixth aspect, in a first possible implementation of the sixth aspect, after receiving the NBIFOM routing rule request sent by the intermediate network device, the receiving unit is further configured to receive a routing rule timing instruction sent by the intermediate network device; after the sending unit sends the K routing rules to the intermediate network device, the receiving unit is further configured to receive a routing rule reception response sent by the intermediate network device; the processing unit is further configured to start timing according to the routing rule timing instruction when the routing rule reception response is received; and when receiving the routing rule acknowledgement indication information sent by the intermediate network device, the receiving unit is specifically configured to receive the routing rule acknowledgement indication information before a timing time reaches a preset time.

According to the first possible implementation of the sixth aspect, in a second possible implementation of the sixth aspect, if determining that the receiving unit does not receive the routing rule acknowledgement indication information before the timing time reaches the preset time, the processing unit is further configured to determine that the K routing rules are enforceable routing rules.

According to the sixth aspect or the first possible implementation of the sixth aspect or the second possible implementation of the sixth aspect, in a third possible implementation of the sixth aspect, before the receiving unit receives the NBIFOM routing rule request sent by the intermediate network device, the sending unit is further configured to: in a process of establishing a PDN connection between the gateway device and the terminal, send a PDN connection establishment response to the terminal through the intermediate network device, where the PDN connection establishment response carries an NBIFOM mode indication, and the NBIFOM mode indication is used to indicate that a current NBIFOM mode is a network-initiated NBIFOM mode or a terminal-initiated NBIFOM mode, so that the intermediate network device records the current NBIFOM mode.

According to a seventh aspect, an embodiment of the present invention provides a terminal, including a transmitter, a receiver, a processor, and a memory, where the memory is configured to store program code for performing a method for routing rule transmission; and the processor is configured to invoke the program code in the memory to perform: sending an NBIFOM routing rule request to an intermediate network device by using the transmitter, where the NBIFOM routing rule request includes a routing rule generation parameter; receiving, by using the receiver, K routing rules sent by the intermediate network device, where K is an integer greater than or equal to 1; and sending routing rule acknowledgement indication information to the intermediate network device by using the transmitter, where the routing rule acknowledgement indication information includes at least one of the following: identifiers of M routing rules acknowledged by the terminal in the K routing rules and identifiers of N rejected routing rules, where a sum of M and N is equal to K. This ensures consistency of routing rules used by a gateway device and the terminal, and ensures correct transmission of a traffic flow.

According to a seventh aspect, in a first possible implementation of the seventh aspect, before sending the NBIFOM routing rule request to the intermediate network device by using the transmitter, the processor is further configured to: in a process of establishing a PDN connection between the terminal and a gateway device, send a PDN connection establishment request to the gateway device through the intermediate network device by using the transmitter, where the PDN connection establishment request carries an NBIFOM mode indication, and the NBIFOM mode indication is used to indicate that a current NBIFOM mode is a network-initiated NBIFOM mode or a terminal-initiated NBIFOM mode, so that the intermediate network device records the current NBIFOM mode.

According to an eighth aspect, an embodiment of the present invention provides an intermediate network device, including a communications interface, a processor, and a memory, where the memory is configured to store program code for performing a method for routing rule transmission; and the processor is configured to invoke the program code in the memory to perform: receiving, by using the communications interface, an NBIFOM routing rule request sent by a terminal, and sending the NBIFOM routing rule request to a gateway device by using the communications interface, where the NBIFOM routing rule request includes a routing rule generation parameter; receiving, by using the communications interface, K routing rules that are generated by the gateway device according to the NBIFOM routing rule request, and sending the K routing rules to the terminal by using the communications interface, where K is an integer greater than or equal to 1; and receiving, by using the communications interface, routing rule acknowledgement indication information sent by the terminal, and sending the routing rule acknowledgement indication information to the gateway device by using the communications interface, where the routing rule acknowledgement indication information includes at least one of the following: identifiers of M routing rules acknowledged by the terminal in the K routing rules and identifiers of N rejected routing rules, where a sum of M and N is equal to K. This ensures consistency of routing rules used by the gateway device and the terminal, and ensures correct transmission of a traffic flow.

According to the eighth aspect, in a first possible implementation of the eighth aspect, after receiving, by using the communications interface, the NBIFOM routing rule request sent by the terminal, the processor is further configured to send a routing rule timing instruction to the gateway device by using the communications interface; and after receiving, by using the communications interface, the K routing rules that are generated by the gateway device according to the routing rule request, the processor is further configured to send a routing rule reception response to the gateway device by using the communications interface; where the routing rule timing instruction is used to instruct the gateway device to: start timing when the gateway device receives the routing rule reception response, and determine an enforceable routing rule according to the routing rule acknowledgement indication information if the routing rule acknowledgement indication information is received before a timing time reaches the preset time, or determine the K routing rules as enforceable routing rules if the routing rule acknowledgement indication information is not received before a timing time reaches the preset time.

According to the eighth aspect or the first possible implementation of the eighth aspect, in a second possible implementation of the eighth aspect, before sending the K routing rules to the terminal by using the communications interface, the processor is further configured to determine that the NBIFOM routing rule request is sent by the terminal in a network-initiated NBIFOM mode.

According to the second possible implementation of the eighth aspect, in a third possible implementation of the eighth aspect, before receiving, by using the communications interface, the NBIFOM routing rule request sent by the terminal, the processor is further configured to: in a process of establishing a PDN connection between the terminal and the gateway device, receive, by using the communications interface, a PDN connection establishment request sent by the terminal to the gateway device, where the PDN connection establishment request includes an NBIFOM container, and the NBIFOM container carries an NBIFOM mode indication; or receive, by using the communications interface, a PDN connection establishment response sent by the gateway device to the terminal, where the PDN connection establishment response includes an NBIFOM container, and the NBIFOM container carries an NBIFOM mode indication; where the NBIFOM mode indication is used to indicate that a current NBIFOM mode is the network-initiated NBIFOM mode or a terminal-initiated NBIFOM mode; the processor is further configured to parse the NBIFOM container to obtain the NBIFOM mode indication, and record the current NBIFOM mode according to the NBIFOM mode indication; and when determining that the NBIFOM routing rule request is sent by the terminal in the network-initiated NBIFOM mode, the processor is specifically configured to determine, according to the current NBIFOM mode recorded as the network-initiated NBIFOM mode, that the NBIFOM routing rule request is sent by the terminal in the network-initiated NBIFOM mode.

According to the second possible implementation of the eighth aspect, in a fourth possible implementation of the eighth aspect, before receiving, by using the communications interface, the NBIFOM routing rule request sent by the terminal, the processor is further configured to: in a process of establishing a PDN connection between the terminal and the gateway device, receive, by using the communications interface, a PDN connection establishment request sent by the terminal to the gateway device, where the PDN connection establishment request carries an NBIFOM mode indication; or receive, by using the communications interface, a PDN connection establishment response sent by the gateway device to the terminal, where the PDN connection establishment response carries an NBIFOM mode indication; where the NBIFOM mode indication is used to indicate that a current NBIFOM mode is the network-initiated NBIFOM mode or a terminal-initiated NBIFOM mode; the processor is further configured to record the current NBIFOM mode according to the NBIFOM mode indication; and when determining that the NBIFOM routing rule request is sent by the terminal in the network-initiated NBIFOM mode, the processor is specifically configured to determine, according to the current NBIFOM mode recorded as the network-initiated NBIFOM mode, that the NBIFOM routing rule request is sent by the terminal in the network-initiated NBIFOM mode.

According to the second possible implementation of the eighth aspect, in a fifth possible implementation of the eighth aspect, the NBIFOM routing rule request further includes a first indication, and the first indication is used to indicate whether a current access network is available to the terminal, or used to indicate that a traffic flow of the terminal in the current corresponding access network needs to be transferred from an RAN to a WLAN or from a WLAN to an RAN, or used to indicate that a type of the NBIFOM routing rule request is a traffic flow mapping request; and when determining that the NBIFOM routing rule request is sent by the terminal in the network-initiated NBIFOM mode, the processor is specifically configured to determine, according to the first indication, that the NBIFOM routing rule request is sent by the terminal in the network-initiated NBIFOM mode.

According to a ninth aspect, an embodiment of the present invention provides a gateway device, including a communications interface, a processor, and a memory, where the memory is configured to store program code for performing a method for routing rule transmission; and the processor is configured to invoke the program code in the memory to perform: receiving, by using the communications interface, an NBIFOM routing rule request sent by an intermediate network device, where the NBIFOM routing rule request includes a routing rule generation parameter; generating K routing rules according to the NBIFOM routing rule request, where K is an integer greater than or equal to 1; sending the K routing rules to the intermediate network device by using the communications interface; receiving, by using the communications interface, routing rule acknowledgement indication information sent by the intermediate network device, where the routing rule acknowledgement indication information includes at least one of the following: identifiers of M routing rules acknowledged by a terminal in the K routing rules and identifiers of N rejected routing rules, where a sum of M and N is equal to K; and determining, according to the routing rule acknowledgement indication information, the N routing rules rejected by the terminal in the K routing rules. This ensures consistency of routing rules used by the gateway device and the terminal, and ensures correct transmission of a traffic flow.

According to the ninth aspect, in a first possible implementation of the ninth aspect, after receiving, by using the communications interface, the NBIFOM routing rule request sent by the intermediate network device, the processor is further configured to receive, by using the communications interface, a routing rule timing instruction sent by the intermediate network device; after sending the K routing rules to the intermediate network device by using the communications interface, the processor is further configured to receive, by using the communications interface, a routing rule reception response sent by the intermediate network device; the processor is further configured to start timing according to the routing rule timing instruction when the routing rule reception response is received; and when receiving, by using the communications interface, the routing rule acknowledgement indication information sent by the intermediate network device, the processor is specifically configured to receive the routing rule acknowledgement indication information by using the communications interface before a timing time reaches a preset time.

According to the first possible implementation of the ninth aspect, in a second possible implementation of the ninth aspect, if determining that the routing rule acknowledgement indication information is not received by using the communications interface before the timing time reaches the preset time, the processor is further configured to determine that the K routing rules are enforceable routing rules.

According to the ninth aspect or the first possible implementation of the ninth aspect or the second possible implementation of the ninth aspect, in a third possible implementation of the ninth aspect, before receiving, by using the communications interface, the NBIFOM routing rule request sent by the intermediate network device, the processor is further configured to: in a process of establishing a PDN connection between the gateway device and the terminal, send a PDN connection establishment response to the terminal through the intermediate network device by using the communications interface, where the PDN connection establishment response carries an NBIFOM mode indication, and the NBIFOM mode indication is used to indicate that a current NBIFOM mode is a network-initiated NBIFOM mode or a terminal-initiated NBIFOM mode, so that the intermediate network device records the current NBIFOM mode.

According to a tenth aspect, an embodiment of the present invention provides a system for routing rule transmission, where the system includes the terminal according to any one of the fourth aspect or the possible implementations of the fourth aspect, the intermediate network device according to any one of the fifth aspect or the possible implementations of the fifth aspect, and the gateway device according to any one of the sixth aspect or the possible implementations of the sixth aspect; or
the terminal according to any one of the seventh aspect or the possible implementations of the seventh aspect, the intermediate network device according to any one of the eighth aspect or the possible implementations of the eighth aspect, and the gateway device according to any one of the ninth aspect or the possible implementations of the ninth aspect.

According to an eleventh aspect, an embodiment of the present invention provides a method for routing rule transmission, where the method includes:
receiving, by an intermediate network device, an NBIFOM routing rule request sent by a terminal, and sending the NBIFOM routing rule request to a gateway device;
receiving, by the intermediate network device, an NBIFOM container including K routing rules and sent by the gateway device, and sending the NBIFOM container including the K routing rules to the terminal, where K is an integer greater than or equal to 1; and
receiving, by the intermediate network device, routing rule acknowledgement indication information sent by the terminal, and sending the routing rule acknowledgement indication information to the gateway device, where the routing rule acknowledgement indication information includes first indication information or second indication information, the first indication information is used to indicate that the terminal accepts the K routing rules, and the second indication information is used to indicate that the terminal rejects at least one of the K routing rules.

Optionally, after the receiving, by an intermediate network device, an NBIFOM routing rule request sent by a terminal, the method further includes:
determining, by the intermediate network device, whether third indication information is received from the gateway device, where the third indication information is used to instruct the intermediate network device to send an acknowledgement message that does not carry any routing rule to the terminal; and
if the intermediate network device determines that the third indication information is received from the gateway device, sending, by the intermediate network device, an acknowledgement message to the terminal, where the acknowledgement message does not carry the NBIFOM container including the K routing rules, and the acknowledgement message is used to acknowledge reception of the NBIFOM routing rule request sent by the terminal.

Optionally, the sending, by the intermediate network device, the NBIFOM container including the K routing rules to the terminal includes:
determining, by the intermediate network device, whether third indication information is received from the gateway device, where the third indication information is used to indicate that a feedback of the terminal is required for an NBIFOM container sent by the intermediate network device, or the third indication information is used to instruct the intermediate network device to send an NBIFOM container to the terminal by using a request message; and
if the intermediate network device determines that the third indication information is received from the gateway device, sending, by the intermediate network device, a first request message to the terminal, where the first request message carries the NBIFOM container including the K routing rules.

Optionally, the first request message is a request secondary PDP context activation message or a modify PDP context request message.

Optionally, the method further includes:
sending, by the intermediate network device, an acknowledgement message to the terminal, where the acknowledgement message does not carry the NBIFOM container including the K routing rules, and the acknowledgement message is used to acknowledge reception of the NBIFOM routing rule request sent by the terminal.

Optionally, the method further includes:
receiving, by the intermediate network device, the third indication information from the gateway device.

Optionally, the third indication information and the NBIFOM container including the K routing rules are both carried in a create bearer request message or an update bearer request message; or
the third indication information is carried in a create session response message, and the NBIFOM container including the K routing rules is carried in a create bearer request message or an update bearer request message.

Optionally, after the receiving, by the intermediate network device, the third indication information from the gateway device, the method further includes:
storing, by the intermediate network device, the third indication information.

Optionally, the NBIFOM routing rule request includes an NBIFOM container.

According to a twelfth aspect, an embodiment of the present invention provides a method for routing rule transmission, where the method includes:
receiving, by a gateway device, an NBIFOM routing rule request; and
sending, by the gateway device according to the NBIFOM routing rule request, third indication information and an NBIFOM container including K routing rules to an intermediate network device; where
K is an integer greater than or equal to 1, and the third indication information is used to instruct the intermediate network device to send an acknowledgement message that does not carry any routing rule to a terminal, or the third indication information is used to indicate that a feedback of a terminal is required for an NBIFOM container sent by the intermediate network device, or the third indication information is used to instruct the intermediate network device to send an NBIFOM container to a terminal by using a request message.

Optionally, the sending, by the gateway device, third indication information to an intermediate network device includes:
if a packet data network PDN connection of the terminal is in a network-initiated NBIFOM mode, sending, by the gateway device, the third indication information to the intermediate network device.

Optionally, before the receiving, by a gateway device, an NBIFOM routing rule request, the method further includes:
receiving, by the gateway device, mode indication information sent by a policy and charging rules function (English: Policy and Charge Rules Function, PCRF for short), where the mode indication information is used to indicate the mode of the PDN connection of the terminal; and
storing, by the gateway device, the mode indication information.

Optionally, the third indication information and the K routing rules are carried in a create bearer request message or an update bearer request message.

According to a thirteenth aspect, an embodiment of the present invention provides a method for routing rule transmission, where the method includes:
receiving, by a gateway device, mode indication information sent by a PCRF, where the mode indication information is used to indicate a mode of a PDN connection of a terminal;
if the mode indication information indicates that the PDN connection of the terminal is in a network-initiated NBIFOM mode, sending, by the gateway device, third indication information to an intermediate network device, where the third indication information is used to instruct the intermediate network device to send an acknowledgement message that does not carry any routing rule to the terminal, or the third indication information is used to indicate that a feedback of the terminal is required for an NBIFOM container sent by the intermediate network device, or the third indication information is used to instruct the intermediate network device to send an NBIFOM container to the terminal by using a request message;
receiving, by the gateway device, an NBIFOM routing rule request; and
sending, by the gateway device according to the NBIFOM routing rule request, an NBIFOM container including K routing rules to the intermediate network device, where K is an integer greater than or equal to 1.

Optionally, the third indication information is carried in a create session response message and sent to the intermediate network device.

According to a fourteenth aspect, an embodiment of the present invention provides an intermediate network device, including:
a receiving unit, configured to receive an NBIFOM routing rule request sent by a terminal; and
a sending unit, configured to send the NBIFOM routing rule request received by the receiving unit to a gateway device; where
the receiving unit is further configured to receive an NBIFOM container including K routing rules and sent by the gateway device, where K is an integer greater than or equal to 1;
the sending unit is further configured to send the NBIFOM container including the K routing rules and received by the receiving unit to the terminal;
the receiving unit is further configured to receive routing rule acknowledgement indication information sent by the terminal, where the routing rule acknowledgement indication information includes first indication information or second indication information, the first indication information is used to indicate that the terminal accepts the K routing rules, and the second indication information is used to indicate that the terminal rejects at least one of the K routing rules; and
the sending unit is further configured to send the routing rule acknowledgement indication information received by the receiving unit to the gateway device.

Optionally, the intermediate network device further includes:
a determining unit, configured to determine, after the receiving unit receives the NBIFOM routing rule request sent by the terminal, whether third indication information is received from the gateway device, where the third indication information is used to instruct the intermediate network device to send an acknowledgement message that does not carry any routing rule to the terminal; where
if the determining unit determines that the third indication information is received from the gateway device, the sending unit is further configured to send an acknowledgement message to the terminal, where the acknowledgement message does not carry the NBIFOM container including the K routing rules, and the acknowledgement message is used to acknowledge reception of the NBIFOM routing rule request sent by the terminal.

Optionally, the intermediate network device further includes:
a determining unit, configured to determine whether third indication information is received from the gateway device, where the third indication information is used to indicate that a feedback of the terminal is required for an NBIFOM container sent by the intermediate network device, or the third indication information is used to instruct the intermediate network device to send an NBIFOM container to the terminal by using a request message; where
if the determining unit determines that the third indication information is received from the gateway device, the sending unit is further configured to send a first request message to the terminal, where the first request message carries the NBIFOM container including the K routing rules.

Optionally, the first request message is a request secondary PDP context activation message or a modify PDP context request message.

Optionally, the sending unit is further configured to send an acknowledgement message to the terminal, where the acknowledgement message does not carry the NBIFOM container including the K routing rules, and the acknowledgement message is used to acknowledge reception of the NBIFOM routing rule request sent by the terminal.

Optionally, the receiving unit is further configured to receive the third indication information from the gateway device.

Optionally, the third indication information and the NBIFOM container including the K routing rules are both carried in a create bearer request message or an update bearer request message; or
the third indication information is carried in a create session response message, and the NBIFOM container including the K routing rules is carried in a create bearer request message or an update bearer request message.

Optionally, the intermediate network device further includes a storage unit, configured to store, after the receiving unit receives the third indication information from the gateway device, the third indication information received by the receiving unit.

Optionally, the NBIFOM routing rule request includes an NBIFOM container.

According to a fifteenth aspect, an embodiment of the present invention provides a gateway device, including:
a receiving unit, configured to receive an NBIFOM routing rule request; and
a sending unit, configured to send, according to the NBIFOM routing rule request received by the receiving unit, third indication information and an NBIFOM container including K routing rules to an intermediate network device; where
K is an integer greater than or equal to 1, and the third indication information is used to instruct the intermediate network device to send an acknowledgement message that does not carry any routing rule to a terminal, or the third indication information is used to indicate that a feedback of a terminal is required for an NBIFOM container sent by the intermediate network device, or the third indication information is used to instruct the intermediate network device to send an NBIFOM container to a terminal by using a request message.

Optionally, when sending the third indication information to the intermediate network device, the sending unit is specifically configured to send the third indication information to the intermediate network device if a packet data network PDN connection of the terminal is in a network-initiated NBIFOM mode.

Optionally, the gateway device further includes a storage unit, where
before receiving the NBIFOM routing rule request, the receiving unit is further configured to receive mode indication information sent by a PCRF, where the mode indication information is used to indicate the mode of the PDN connection of the terminal; and
the storage unit is configured to store the mode indication information received by the receiving unit.

Optionally, the third indication information and the K routing rules are carried in a create bearer request message or an update bearer request message.

According to a sixteenth aspect, an embodiment of the present invention provides a gateway device, including:
a receiving unit, configured to receive mode indication information sent by a PCRF, where the mode indication information is used to indicate a mode of a packet data network PDN connection of a terminal; and
a sending unit, configured to send third indication information to an intermediate network device if the mode indication information received by the receiving unit indicates that the PDN connection of the terminal is in a network-initiated NBIFOM mode, where the third indication information is used to instruct the intermediate network device to send an acknowledgement message that does not carry any routing rule to the terminal, or the third indication information is used to indicate that a feedback of the terminal is required for an NBIFOM container sent by the intermediate network device, or the third indication information is used to instruct the intermediate network device to send an NBIFOM container to the terminal by using a request message; where
the receiving unit is further configured to receive an NBIFOM routing rule request; and
the sending unit is further configured to send, according to the NBIFOM routing rule request received by the receiving unit, an NBIFOM container including K routing rules to the intermediate network device, where K is an integer greater than or equal to 1.

Optionally, the third indication information is carried in a create session response message and sent to the intermediate network device.

According to a seventeenth aspect, an embodiment of the present invention provides an intermediate network device, including a first communications interface, a second communications interface, a processor, and a memory, where
the memory is configured to store program code for performing a method for routing rule transmission; and
the processor is configured to invoke the program code in the memory to perform:
receiving, by using the first communications interface, an NBIFOM routing rule request sent by a terminal, and sending the NBIFOM routing rule request to a gateway device by using the second communications interface; receiving, by using the second communications interface, an NBIFOM container including K routing rules and sent by the gateway device, and sending, by using the first communications interface, the NBIFOM container including the K routing rules to the terminal, where K is an integer greater than or equal to 1; and receiving, by using the first communications interface, routing rule acknowledgement indication information sent by the terminal, and sending the routing rule acknowledgement indication information to the gateway device by using the second communications interface, where the routing rule acknowledgement indication information includes first indication information or second indication information, the first indication information is used to indicate that the terminal accepts the K routing rules, and the second indication information is used to indicate that the terminal rejects at least one of the K routing rules.

Optionally, after receiving, by using the first communications interface, the NBIFOM routing rule request sent by the terminal, the processor is further configured to: determine whether third indication information is received from the gateway device, where the third indication information is used to instruct the intermediate network device to send an acknowledgement message that does not carry any routing rule to the terminal; and if determining that the third indication information is received from the gateway device, send an acknowledgement message to the terminal by using the first communications interface, where the acknowledgement message does not carry the NBIFOM container including the K routing rules, and the acknowledgement message is used to acknowledge reception of the NBIFOM routing rule request sent by the terminal.

Optionally, the processor is further configured to determine whether third indication information is received from the gateway device, where the third indication information is used to indicate that a feedback of the terminal is required for an NBIFOM container sent by the intermediate network device, or the third indication information is used to instruct the intermediate network device to send anNBIFOM container to the terminal by using a request message; and
when sending, by using the first communications interface, the NBIFOM container including the K routing rules to the terminal, the processor is specifically configured to send a first request message to the terminal by using the first communications interface if determining that the third indication information is received from the gateway device, where the first request message carries the NBIFOM container including the K routing rules.

Optionally, the first request message is a request secondary packet data protocol PDP context activation message or a modify PDP context request message.

Optionally, the processor is further configured to send an acknowledgement message to the terminal by using the first communications interface, where the acknowledgement message does not carry the NBIFOM container including the K routing rules, and the acknowledgement message is used to acknowledge reception of the NBIFOM routing rule request sent by the terminal.

Optionally, the processor is further configured to receive the third indication information from the gateway device by using the second communications interface.

Optionally, the third indication information and the NBIFOM container including the K routing rules are both carried in a create bearer request message or an update bearer request message; or
the third indication information is carried in a create session response message, and the NBIFOM container including the K routing rules is carried in a create bearer request message or an update bearer request message.

Optionally, after receiving the third indication information from the gateway device by using the second communications interface, the processor is further configured to store the third indication information.

Optionally, the NBIFOM routing rule request includes an NBIFOM container.

According to an eighteenth aspect, an embodiment of the present invention provides a gateway device, including a first communications interface, a processor, and a memory, where
the memory is configured to store program code for performing a method for routing rule transmission; and
the processor is configured to invoke the program code in the memory to perform:
receiving an NBIFOM routing rule request by using the first communications interface; and sending, according to the NBIFOM routing rule request, third indication information and an NBIFOM container including K routing rules to an intermediate network device by using the first communications interface; where K is an integer greater than or equal to 1,
and the third indication information is used to instruct the intermediate network device to send an acknowledgement message that does not carry any routing rule to the terminal, or the third indication information is used to indicate that a feedback of the terminal is required for an NBIFOM container sent by the intermediate network device, or the third indication information is used to instruct the intermediate network device to send an NBIFOM container to the terminal by using a request message.

Optionally, when sending the third indication information to the intermediate network device by using the first communications interface, the processor is specifically configured to send the third indication information to the intermediate network device by using the first communications interface if a PDN connection of the terminal is in a network-initiated NBIFOM mode.

Optionally, the gateway device further includes a second communications interface, where
before receiving the NBIFOM routing rule request by using the first communications interface, the processor is further configured to: receive, by using the second communications interface, mode indication information sent by a PCRF, where the mode indication information is used to indicate the mode of the PDN connection of the terminal; and store the mode indication information.

Optionally, the third indication information and the K routing rules are carried in a create bearer request message or an update bearer request message.

According to a nineteenth aspect, an embodiment of the present invention provides a gateway device, including a first communications interface, a second communications interface, a processor, and a memory, where
the memory is configured to store program code for performing a method for routing rule transmission; and
the processor is configured to invoke the program code in the memory to perform:
receiving, by using the first communications interface, mode indication information sent by a PCRF, where the mode indication information is used to indicate a mode of a PDN connection of a terminal; if the mode indication information indicates that the PDN connection of the terminal is in a network-initiated NBIFOM mode, sending third indication information to an intermediate network device by using the second communications interface, where the third indication information is used to instruct the intermediate network device to send an acknowledgement message that does not carry any routing rule to the terminal, or the third indication information is used to indicate that a feedback of the terminal is required for an NBIFOM container sent by the intermediate network device, or the third indication information is used to instruct the intermediate network device to send an NBIFOM container to the terminal by using a request message; receiving an NBIFOM routing rule request by using the second communications interface; and sending, according to the NBIFOM routing rule request, an NBIFOM container including K routing rules to the intermediate network device by using the second communications interface, where K is an integer greater than or equal to 1.

Optionally, the third indication information is carried in a create session response message and sent to the intermediate network device.

In the foregoing solutions of the embodiments of the present invention, the terminal sends the NBIFOM routing rule request to the gateway device through the intermediate network device; the gateway device sends at least one routing rule to the terminal through the intermediate network device according to the NBIFOM routing rule request; the terminal sends the routing rule acknowledgement indication information to the gateway device through the intermediate network device according to the at least one received routing rule; and the gateway device determines, according to the routing rule acknowledgement indication information, a routing rule rejected by the terminal in the at least one routing rule, so that the gateway device transmits a traffic flow by using a routing rule other than the routing rule rejected by the terminal in the at least one routing rule. This ensures consistency of routing rules used by the gateway device and the terminal, and ensures correct transmission of the traffic flow.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is an architectural diagram of a network to which a method for routing rule transmission;
FIG. 2 is a flowchart of a method for routing rule;
FIG. 3 is a flowchart of a method for routing rule transmission;
FIG. 4 is a flowchart of a method for routing rule transmission;
FIG. 5 is a flowchart of a method for routing rule transmission;
FIG. 6 is a schematic structural diagram of a terminal;
FIG. 7 is a schematic structural diagram of an intermediate network device;
FIG. 8 is a schematic structural diagram of a gateway device;
FIG. 9 is a schematic structural diagram of a terminal;
FIG. 10 is a schematic structural diagram of an intermediate network device;
FIG. 11 is a schematic structural diagram of a gateway device;
FIG. 12 is a schematic structural diagram of a system for routing rule transmission;
FIG. 13 is a flowchart of a method for routing rule transmis;
FIG. 14 is a flowchart of a method for routing rule transmission;
FIG. 15 is a flowchart of a method for routing rule transmission;
FIG. 16A and FIG. 16B are a flowchart of a method for routing rule transmission;
FIG. 17A and FIG. 17B are a flowchart of a method for routing rule transmis;
FIG. 18 is a schematic structural diagram of an intermediate network device;
FIG. 19 is a schematic structural diagram of a gateway device;
FIG. 20 is a schematic structural diagram of a gateway device;
FIG. 21 is a schematic structural diagram of an intermediate network device;
FIG. 22 is a schematic structural diagram of a gateway device;
FIG. 23 is a schematic structural diagram of a gateway device;
FIG. 24 is a schematic structural diagram of a system for routing rule transmission;

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

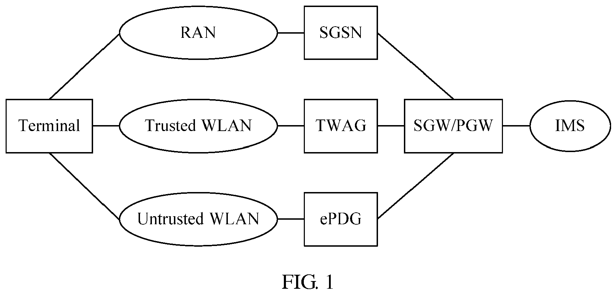

FIG. 1 is an architectural diagram of a network to which a method for routing rule transmission according to an embodiment of the present invention is applied. As shown in FIG. 1, a terminal may access a same SGW or PGW through a 3GPP network and a non-3GPP network, and implement communication between the terminal and an IP multimedia subsystem (English: IP Multimedia Subsystem, IMS for short). This feature is also referred to as NBIFOM. When accessing the serving gateway (English: Serving Gateway, SGW for short)/PGW through the 3GPP network, the terminal may access the SGW or the PGW by connecting to an SGSN through an RAN. When accessing the SGW or the PGW through the non-3GPP network, the terminal may access the SGW or the PGW by connecting to a trusted WLAN access gateway (English: Trusted WLAN Access Gateway, TWAG for short) through a trusted WLAN, or access the SGW or the PGW by connecting to an evolved packet data gateway (English: evolved Packet Data Gateway, ePDG for short) through an untrusted WLAN. The following embodiments of the present invention may be implemented based on the network architecture shown in FIG. 1.

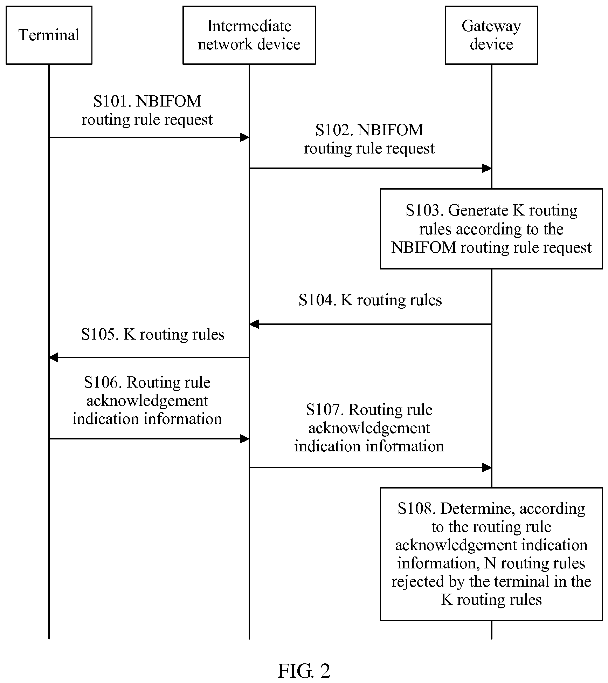

FIG. 2 is a flowchart of a method for routing rule transmission according to Embodiment 1 of the present invention. As shown in FIG. 2, the method in this embodiment may include the following steps.

S101. A terminal sends an NBIFOM routing rule request to an intermediate network device.

The method for routing rule transmission in this embodiment is applied to a network-initiated NBIFOM mode, and the network-initiated NBIFOM mode indicates that a routing rule for a traffic flow is determined by a network. When the terminal needs to request a routing rule for a traffic flow, the routing rule for the traffic flow may include at least one of the following: a routing rule for a modified traffic flow or a routing rule for a new traffic flow. The terminal sends the NBIFOM routing rule request to the intermediate network device. The NBIFOM routing rule request includes a routing rule generation parameter. The specific routing rule generation parameter is similar to a parameter carried when a terminal requests a routing rule in the prior art. Details are not further described herein.

S102. The intermediate network device sends the NBIFOM routing rule request to a gateway device.

In this embodiment, the intermediate network device receives the NBIFOM routing rule request sent by the terminal, and sends the NBIFOM routing rule request to the gateway device.

S103. The gateway device generates K routing rules according to the NBIFOM routing rule request.

In this embodiment, the gateway device receives the NBIFOM routing rule request sent by the intermediate network device, and generates the K routing rules according to the routing rule generation parameter in the NBIFOM routing rule request, where K is an integer greater than or equal to 1.

S104. The gateway device sends the K routing rules to the intermediate network device.

In this embodiment, after generating the K routing rules, the gateway device sends the K routing rules to the intermediate network device.

S105. The intermediate network device sends the K routing rules to the terminal.

In this embodiment, the intermediate network device receives the K routing rules that are generated by the gateway device according to the NBIFOM routing rule request, and sends the K routing rules to the terminal. Each routing rule includes the following parameters: a routing filter (English: Routing Filter), routing access technology information (English: Routing Access Information), a routing rule priority (English: Routing Rule Priority), and a routing rule identifier (Routing Rule identifier). The routing filter includes an IP packet header parameter used to identify a traffic flow or a data packet corresponding to the routing rule. The routing access technology information is used to identify an access network that transmits the traffic flow. The routing rule priority is used to identify a sequence of routing rule matching. The routing rule identifier is unique in a PDN connection.

S106. The terminal sends routing rule acknowledgement indication information to the intermediate network device.

In this embodiment, the terminal receives the K routing rules sent by the intermediate network device, and may learn that the K routing rules are routing rules generated by the network. Then the terminal may determine whether any routing rule encounters an error in a transmission process or determine, based on a status of a current access network, whether the routing rules can be enforced, and therefore determine that a routing rule encountering an error in the transmission process or a routing rule that cannot be enforced based on the status of the current access network is a routing rule that needs to be rejected by the terminal in the K routing rules. Then the terminal sends the routing rule acknowledgement indication information to the intermediate network device, where the routing rule acknowledgement indication information includes at least one of the following: identifiers of M routing rules acknowledged by the terminal in the K routing rules and identifiers of N rejected routing rules, where a sum of M and N is equal to K.

S107. The intermediate network device sends the routing rule acknowledgement indication information to the gateway device.

In this embodiment, the intermediate network device receives the routing rule acknowledgement indication information sent by the terminal, and sends the routing rule acknowledgement indication information to the gateway device.

S108. The gateway device determines, according to the routing rule acknowledgement indication information, N routing rules rejected by the terminal in the K routing rules.

In this embodiment, the gateway device receives the routing rule acknowledgement indication information sent by the intermediate network device, and determines, according to the routing rule acknowledgement indication information, the N routing rules rejected by the terminal in the K routing rules. Then the gateway device does not use the N routing rules rejected by the terminal to transmit the traffic flow, but uses the M routing rules acknowledged by the terminal to transmit the traffic flow. This ensures consistency of routing rules used by the gateway device and the terminal, and ensures correct transmission of the traffic flow.

When the routing rule acknowledgement indication information includes the identifiers of the M routing rules acknowledged by the terminal in the K routing rules, the gateway device may determine, according to the identifiers of the M routing rules, that identifiers of (K-M) routing rules other than the identifiers of the M routing rules in the identifiers of the K routing rules are identifiers of the routing rules rejected by the terminal, that is, the N routing rules are the routing rules rejected by the terminal.

When the routing rule acknowledgement indication information includes the identifiers of the N routing rules rejected by the terminal in the K routing rules, the gateway device may determine, according to the identifiers of the N routing rules, that the identifiers of the N routing rules in the identifiers of the K routing rules are identifiers of the routing rules rejected by the terminal, that is, the N routing rules are the routing rules rejected by the terminal.

When the routing rule acknowledgement indication information includes the identifiers of the M routing rules acknowledged by the terminal in the K routing rules and the identifiers of the N routing rules rejected by the terminal in the K routing rules, the gateway device may determine, according to the identifiers of the N routing rules, that the identifiers of the N routing rules in the identifiers of the K routing rules are identifiers of the routing rules rejected by the terminal, that is, the N routing rules are the routing rules rejected by the terminal.

In this embodiment, the terminal sends the NBIFOM routing rule request to the gateway device through the intermediate network device; the gateway device generates at least one routing rule according to the NBIFOM routing rule request, and sends the at least one routing rule to the terminal through the intermediate network device; the terminal sends the routing rule acknowledgement indication information to the gateway device through the intermediate network device according to the at least one received routing rule; and the gateway device determines, according to the routing rule acknowledgement indication information, a routing rule rejected by the terminal in the at least one routing rule, so that the gateway device transmits the traffic flow by using a routing rule other than the routing rule rejected by the terminal in the at least one routing rule. This ensures consistency of routing rules used by the gateway device and the terminal, and ensures correct transmission of the traffic flow.

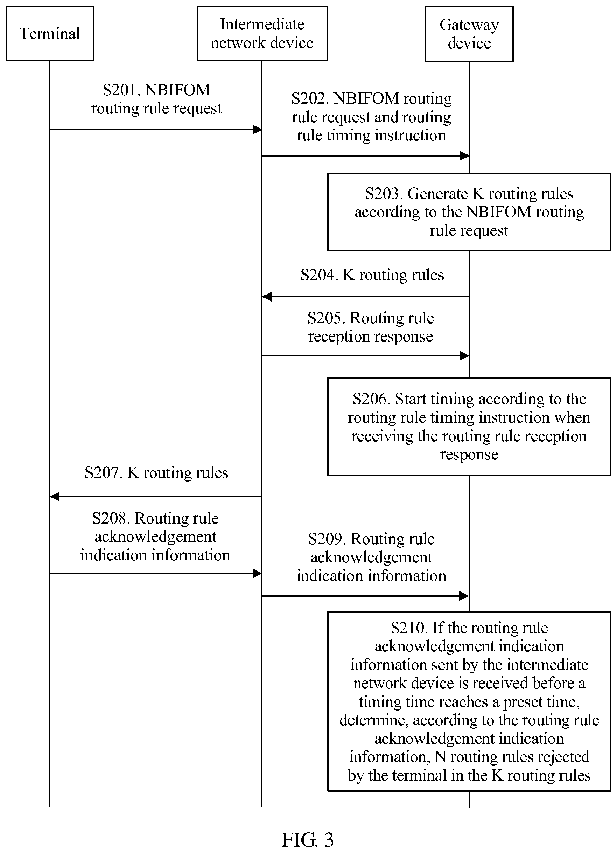

FIG. 3 is a flowchart of a method for routing rule transmission according to Embodiment 2 of the present invention. As shown in FIG. 3, the method in this embodiment may include the following steps.

S201. A terminal sends an NBIFOM routing rule request to an intermediate network device.

In this embodiment, for a specific implementation process of S201, refer to related descriptions in method Embodiment 1 of the present invention. Details are not further described herein.

S202. The intermediate network device sends the NBIFOM routing rule request and a routing rule timing instruction to a gateway device.

In this embodiment, after receiving the NBIFOM routing rule request sent by the terminal, the intermediate network device sends the NBIFOM routing rule request to the gateway device, and further sends the routing rule timing instruction to the gateway device. It should be noted that, the intermediate network device may send the NBIFOM routing rule request and the routing rule timing instruction to the gateway device in a same step or in different steps. This is not limited in this embodiment. In addition, in this embodiment, the intermediate network device may send the routing rule timing instruction to the gateway device before S205.

The routing rule timing instruction in this embodiment is used to instruct the gateway device to: start timing when the gateway device receives a routing rule reception response, and determine an enforceable routing rule according to routing rule acknowledgement indication information if the routing rule acknowledgement indication information is received before a timing time reaches a preset time, or determine K routing rules as enforceable routing rules if the routing rule acknowledgement indication information is not received before a timing time reaches a preset time.

S203. The gateway device generates K routing rules according to the NBIFOM routing rule request.

S204. The gateway device sends the K routing rules to the intermediate network device.

In this embodiment, for specific implementation processes of S203 and S204, refer to related descriptions in method Embodiment 1 of the present invention. Details are not further described herein.

S205. The intermediate network device sends a routing rule reception response to the gateway device.

S206. The gateway device starts timing according to the routing rule timing instruction when receiving the routing rule reception response.

In this embodiment, after receiving the K routing rules sent by the gateway device, the intermediate network device sends the routing rule reception response to the gateway device. The gateway device receives the routing rule reception response sent by the intermediate network device, and starts timing according to the routing rule timing instruction when receiving the routing rule reception response.

S207. The intermediate network device sends the K routing rules to the terminal.

In this embodiment, after sending the routing rule reception response to the gateway device, the intermediate network device sends the K routing rules to the terminal. It should be noted that, an execution sequence of S205 and S207 is not limited.

S208. The terminal sends routing rule acknowledgement indication information to the intermediate network device.

In this embodiment, for a specific implementation process of S208, refer to related descriptions of S106 in method Embodiment 1 of the present invention. Details are not further described herein.

S209. The intermediate network device sends the routing rule acknowledgement indication information to the gateway device.

S210. If the gateway device receives, before a timing time reaches a preset time, the routing rule acknowledgement indication information sent by the intermediate network device, the gateway device determines, according to the routing rule acknowledgement indication information, N routing rules rejected by the terminal in the K routing rules.

In this embodiment, after receiving the routing rule acknowledgement indication information sent by the terminal, the intermediate network device sends the routing rule acknowledgement indication information to the gateway device. In this embodiment, if the gateway device receives, before the timing time reaches the preset time, the routing rule acknowledgement indication information sent by the intermediate network device, that is, the timing time of the gateway device is less than the preset time, the gateway device determines, according to the routing rule acknowledgement indication information, the N routing rules rejected by the terminal in the K routing rules. Then the gateway device does not use the N routing rules rejected by the terminal to transmit a traffic flow, but uses M routing rules acknowledged by the terminal to transmit the traffic flow. This ensures consistency of routing rules used by the gateway device and the terminal, and ensures correct transmission of the traffic flow.

Optionally, in another embodiment, the foregoing S210 is not performed after S209 is performed. The intermediate network device sends the routing rule acknowledgement indication information to the gateway device after receiving the routing rule acknowledgement indication information sent by the terminal. If the gateway device does not receive, before the timing time reaches the preset time, the routing rule acknowledgement indication information sent by the intermediate network device, the gateway device determines that the K routing rules as enforceable routing rules. There are two possibilities: The gateway device has not received, after the timing time reaches the preset time, the routing rule acknowledgement indication information sent by the intermediate network device; and the gateway device receives, after the timing time reaches the preset time, the routing rule acknowledgement indication information sent by the intermediate network device. Then the gateway device transmits the traffic flow by using the K routing rules.

In this embodiment, the terminal sends the NBIFOM routing rule request to the gateway device through the intermediate network device, and the intermediate network device further sends the routing rule timing instruction to the gateway device; the gateway device generates at least one routing rule according to the NBIFOM routing rule request, and sends the at least one routing rule to the terminal through the intermediate network device; in addition, the intermediate network device sends the routing rule reception response to the gateway device; then the gateway device starts timing according to the routing rule timing instruction when receiving the routing rule reception response; and if the gateway device receives, before the timing time reaches the preset time, the routing rule acknowledgement indication information sent by the terminal through the intermediate network device, the gateway device determines, according to the routing rule acknowledgement indication information, a routing rule rejected by the terminal in the at least one routing rule, so that the gateway device transmits the traffic flow by using a routing rule other than the routing rule rejected by the terminal in the at least one routing rule. This ensures consistency of routing rules used by the gateway device and the terminal, and ensures correct transmission of the traffic flow.

A method for routing rule transmission according to Embodiment 3 of the present invention is based on the method Embodiment 1 or 2 of the present invention. In this embodiment, before sending the K routing rules to the terminal, the intermediate network device further determines that the NBIFOM routing rule request is sent by the terminal in the network-initiated NBIFOM mode. Optionally, on a basis of the method Embodiment 1 of the present invention, the intermediate network device may determine, after receiving the NBIFOM routing rule request sent by the terminal, that the NBIFOM routing rule request is sent by the terminal in the network-initiated NBIFOM mode. Optionally, on a basis of the method Embodiment 2 of the present invention, that the intermediate network device in this embodiment determines that the NBIFOM routing rule request is sent by the terminal in the network-initiated NBIFOM mode may be performed before the intermediate network device sends the routing rule timing instruction to the gateway device.

That the intermediate network device determines that the NBIFOM routing rule request is sent by the terminal in the network-initiated NBIFOM mode may include the following five feasible implementations.

In a first feasible implementation, before the intermediate network device receives the NBIFOM routing rule request sent by the terminal, in a process of establishing a PDN connection between the terminal and the gateway device, the terminal sends a PDN connection establishment request to the gateway device through the intermediate network device. The intermediate network device may receive the PDN connection establishment request sent by the terminal to the gateway device. The PDN connection establishment request includes an NBIFOM container, the NBIFOM container carries an NBIFOM mode indication, and the NBIFOM mode indication is used to indicate that a current NBIFOM mode is the network-initiated NBIFOM mode or a terminal-initiated NBIFOM mode. Then the intermediate network device parses the NBIFOM container in the PDN connection establishment request to obtain the NBIFOM mode indication, and records the current NBIFOM mode according to the NBIFOM mode indication, that is, if the NBIFOM mode indication indicates that the current NBIFOM mode is the network-initiated NBIFOM mode, records the current NBIFOM mode as the network-initiated NBIFOM mode, or if the NBIFOM mode indication indicates that the current NBIFOM mode is the terminal-initiated NBIFOM mode, records the current NBIFOM mode as the terminal-initiated NBIFOM mode. Therefore, the intermediate network device may determine, according to the current NBIFOM mode recorded as the network-initiated NBIFOM mode, that the NBIFOM routing rule request is sent by the terminal in the network-initiated NBIFOM mode.

In a second feasible implementation, before the intermediate network device receives the NBIFOM routing rule request sent by the terminal, in a process of establishing a PDN connection between the terminal and the gateway device, the terminal sends a PDN connection establishment request to the gateway device through the intermediate network device. The intermediate network device may receive the PDN connection establishment request sent by the terminal to the gateway device. The PDN connection establishment request carries an NBIFOM mode indication, the NBIFOM mode indication is used to indicate that a current NBIFOM mode is the network-initiated NBIFOM mode or a terminal-initiated NBIFOM mode. Then the intermediate network device records the current NBIFOM mode according to the NBIFOM mode indication in the PDN connection establishment request, that is, if the NBIFOM mode indication indicates that the current NBIFOM mode is the network-initiated NBIFOM mode, records the current NBIFOM mode as the network-initiated NBIFOM mode, or if the NBIFOM mode indication indicates that the current NBIFOM mode is the terminal-initiated NBIFOM mode, records the current NBIFOM mode as the terminal-initiated NBIFOM mode. Therefore, the intermediate network device may determine, according to the current NBIFOM mode recorded as the network-initiated NBIFOM mode, that the NBIFOM routing rule request is sent by the terminal in the network-initiated NBIFOM mode.

Optionally, on a basis of the first feasible implementation or the second feasible implementation, if the terminal establishes the PDN connection to the gateway device through an RAN, the intermediate network device is an SGSN, and the PDN connection establishment request is an activate PDN context request (English: Activate PDP Context Request) message. If the terminal establishes the PDN connection to the gateway device through a trusted WLAN, the intermediate network device is a TWAG, and the PDN connection establishment request is a WLCP PDN connection establishment request (English: WLCP PDN Connection Establishment Request) message. If the terminal establishes the PDN connection to the gateway device through an untrusted WLAN, the intermediate network device is an ePDG, and the PDN connection establishment request is an IKEv2 AUTH request message.

In a third feasible implementation, before the intermediate network device receives the NBIFOM routing rule request sent by the terminal, in a process of establishing a PDN connection between the terminal and the gateway device, the gateway device sends a PDN connection establishment response to the terminal through the intermediate network device. The intermediate network device may receive the PDN connection establishment response sent by the gateway device to the terminal. The PDN connection establishment response includes an NBIFOM container, the NBIFOM container carries an NBIFOM mode indication, and the NBIFOM mode indication is used to indicate that a current NBIFOM mode is the network-initiated NBIFOM mode or a terminal-initiated NBIFOM mode. Then the intermediate network device parses the NBIFOM container in the PDN connection establishment response to obtain the NBIFOM mode indication, and records the current NBIFOM mode according to the NBIFOM mode indication, that is, if the NBIFOM mode indication indicates that the current NBIFOM mode is the network-initiated NBIFOM mode, records the current NBIFOM mode as the network-initiated NBIFOM mode, or if the NBIFOM mode indication indicates that the current NBIFOM mode is the terminal-initiated NBIFOM mode, records the current NBIFOM mode as the terminal-initiated NBIFOM mode. Therefore, the intermediate network device may determine, according to the current NBIFOM mode recorded as the network-initiated NBIFOM mode, that the NBIFOM routing rule request is sent by the terminal in the network-initiated NBIFOM mode.

In a fourth feasible implementation, before the intermediate network device receives the NBIFOM routing rule request sent by the terminal, in a process of establishing a PDN connection between the terminal and the gateway device, the gateway device sends a PDN connection establishment response to the terminal through the intermediate network device. The intermediate network device may receive the PDN connection establishment response sent by the gateway device to the terminal. The PDN connection establishment response carries an NBIFOM mode indication, the NBIFOM mode indication is used to indicate that a current NBIFOM mode is the network-initiated NBIFOM mode or a terminal-initiated NBIFOM mode. Then the intermediate network device records the current NBIFOM mode according to the NBIFOM mode indication in the PDN connection establishment response, that is, if the NBIFOM mode indication indicates that the current NBIFOM mode is the network-initiated NBIFOM mode, records the current NBIFOM mode as the network-initiated NBIFOM mode, or if the NBIFOM mode indication indicates that the current NBIFOM mode is the terminal-initiated NBIFOM mode, records the current NBIFOM mode as the terminal-initiated NBIFOM mode. Therefore, the intermediate network device may determine, according to the current NBIFOM mode recorded as the network-initiated NBIFOM mode, that the NBIFOM routing rule request is sent by the terminal in the network-initiated NBIFOM mode.

Optionally, on a basis of the third feasible implementation or the fourth feasible implementation, the PDN connection establishment response is a create session response (English: Create Session Response) message. If the terminal establishes the PDN connection to the gateway device through an RAN, the intermediate network device is an SGSN. If the terminal establishes the PDN connection to the gateway device through a trusted WLAN, the intermediate network device is a TWAG. If the terminal establishes the PDN connection to the gateway device through an untrusted WLAN, the intermediate network device is an ePDG.

In a fifth feasible implementation, the NBIFOM routing rule request further includes a first indication, where the first indication is used to indicate whether the current access network is available to the terminal, or used to indicate that the traffic flow of the terminal in the current corresponding access network needs to be transferred from an RAN to a WLAN or from a WLAN to an RAN, or used to indicate that a type of the NBIFOM routing rule request is a traffic flow mapping request. Therefore, the intermediate network device may determine, according to the first indication included in the NBIFOM routing rule request, that the NBIFOM routing rule request is sent by the terminal in the network-initiated NBIFOM mode. The WLAN may be a trusted WLAN or may be an untrusted WLAN.

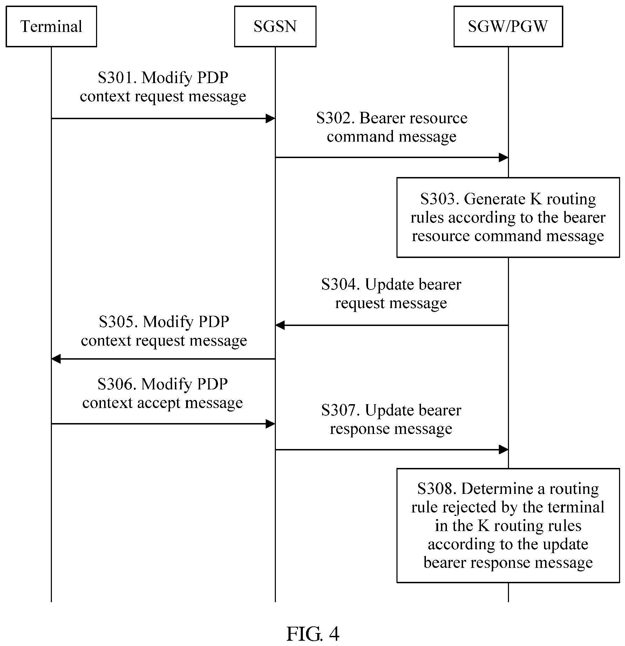

FIG. 4 is a flowchart of a method for routing rule transmission according to Embodiment 4 of the present invention. As shown in FIG. 4, in this embodiment, for example, a terminal sends an NBIFOM routing rule request to a gateway device through an RAN, the gateway device is an SGW or a PGW, and correspondingly, an intermediate network device is an SGSN. The method in this embodiment may include the following steps.

S301. A terminal sends a modify PDP context request message to an SGSN.

In this embodiment, the terminal sends an NBIFOM routing rule request to the SGSN by using the modify PDP context request (English: Modify PDP Context Request) message.

S302. The SGSN sends a bearer resource command message to an SGW or a PGW.

In this embodiment, the SGSN receives the modify PDP context request message that carries the NBIFOM routing rule request and is sent by the terminal, and sends the NBIFOM routing rule request to the SGW or the PGW by using the bearer resource command (English: Bearer Resource Command) message.

S303. The SGW or the PGW generates K routing rules according to the bearer resource command message.

In this embodiment, after receiving the bearer resource command message, the SGW or the PGW generates the K routing rules according to the NBIFOM routing rule request in the bearer resource command message.

S304. The SGW or the PGW sends an update bearer request message to the SGSN.

In this embodiment, after generating the K routing rules, the SGW or the PGW sends the K routing rules to the SGSN by using the update bearer request (English: Update Bearer Request) message.

S305. The SGSN sends a modify PDP context request message to the terminal.

In this embodiment, after the SGSN obtains, by using the update bearer request message sent by the SGW or the PGW, the K routing rules generated by the SGW or the PGW, the SGSN sends the K routing rules to the terminal by using the modify PDP context request message.

S306. The terminal sends a modify PDP context accept message to the SGSN.

In this embodiment, after the terminal obtains, by using the modify PDP context request message sent by the SGSN, the K routing rules generated by the SGW or the PGW, the terminal sends routing rule acknowledgement indication information to the SGSN by using the modify PDP context accept (English: Modify PDP Context Accept) message. Optionally, if the routing rule acknowledgement indication information is used to indicate identifiers of the K routing rules rejected by the terminal, the terminal may send the routing rule acknowledgement indication information to the SGSN by using a modify PDP context reject (English: Modify PDP Context Reject) message.

S307. The SGSN sends an update bearer response message to the SGW or the PGW.

In this embodiment, the SGSN obtains the routing rule acknowledgement indication information by using the modify PDP context accept message sent by the terminal, and then sends the routing rule acknowledgement indication information to the SGW or the PGW by using the update bearer response (English: Update Bearer Response) message.

S308. The SGW or the PGW determines a routing rule rejected by the terminal in the K routing rules according to the update bearer response message.

In this embodiment, the SGW or the PGW receives the update bearer response message sent by the SGSN, obtains the routing rule acknowledgement indication information in the update bearer response message, and may determine, according to the routing rule acknowledgement indication information, the routing rule rejected by the terminal in the K routing rules. Then the gateway device does not use N routing rules rejected by the terminal to transmit a traffic flow, but uses M routing rules acknowledged by the terminal to transmit the traffic flow. This ensures consistency of routing rules used by the gateway device and the terminal, and ensures correct transmission of the traffic flow.

Optionally, after the SGSN performs S302 and before the SGW or the PGW performs S304, the method further includes: S3021. The SGSN sends a modify PDP context accept message (not shown in the figure) to the terminal. In S3021, the modify PDP context accept message sent by the SGSN differs from the modify PDP context accept message in S306 in that the modify PDP context accept message in S3021 does not carry any routing rule. This is because the terminal starts a timer when sending the modify PDP context request message in S301 and stops timing when receiving a modify PDP context accept message. In S3021, the SGSN sends the modify PDP context accept message to the terminal so that the terminal stops timing when the terminal receives the modify PDP context accept message. Optionally, on this basis, before performing S3021, the intermediate network device determines that the modify PDP context request message carrying the NBIFOM routing rule request is sent by the terminal in a network-initiated NBIFOM mode.

On a basis of the method for routing rule transmission as shown in Embodiment 4 of the present invention, optionally, the terminal sends the NBIFOM routing rule request to the gateway device through a trusted WLAN, the gateway device is the SGW or the PGW. Correspondingly, the SGSN in the foregoing method embodiment 4 is a TWAG, the modify PDP context request message is a WLCP PDN connection modification request (English: WLCP PDN Connection Modification Request) message, the modify PDP context accept message is a WLCP PDN connection modification response (English: WLCP PDN Connection Modification Response) message, and the modify PDP context reject message is a WLCP PDN connection modification reject (English: WLCP PDN Connection Modification Reject) message, where WLCP stands for the WLAN Control Protocol.

On a basis of the method for routing rule transmission as shown in Embodiment 4 of the present invention, optionally, the terminal sends the NBIFOM routing rule request to the gateway device through an untrusted WLAN, the gateway device is the SGW or the PGW. Correspondingly, the SGSN in the foregoing method Embodiment 4 is an ePDG, the modify PDP context request message is an IKEv2 informational request (English: IKEv2 Informational Request) message, and the modify PDP context accept message is an IKEv2 informational response (English: IKEv2 Informational Response).

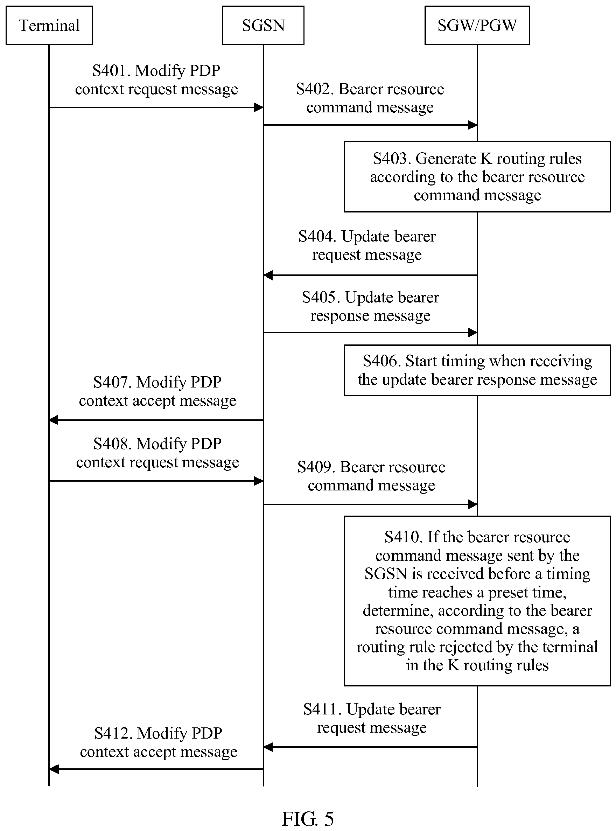

FIG. 5 is a flowchart of a method for routing rule transmission according to Embodiment 5 of the present invention. As shown in FIG. 5, in this embodiment, for example, a terminal sends an NBIFOM routing rule request to a gateway device through an RAN, the gateway device is an SGW or a PGW, and correspondingly, an intermediate network device is an SGSN. The method in this embodiment may include the following steps.

S401. A terminal sends a modify PDP context request message to an SGSN.

In this embodiment, the terminal sends an NBIFOM routing rule request to the SGSN by using the modify PDP context request message.

S402. The SGSN sends a bearer resource command message to an SGW or a PGW.

In this embodiment, the SGSN receives the modify PDP context request message that carries the NBIFOM routing rule request and is sent by the terminal, and sends the NBIFOM routing rule request and a routing rule timing instruction to the SGW or the PGW by using the bearer resource command message.

The routing rule timing instruction is used to instruct the SGW or the PGW to: start timing when the SGW or the PGW receives an update bearer response message carrying a routing rule reception response, and determine an enforceable routing rule according to a modify PDP context request message if the modify PDP context request message carrying routing rule acknowledgement indication information is received before a timing time reaches a preset time, or determine K routing rules as enforceable routing rules if the modify PDP context request message carrying routing rule acknowledgement indication information is not received before a timing time reaches a preset time.

Optionally, before performing S402, the intermediate network device determines that the modify PDP context request message carrying the NBIFOM routing rule request is sent by the terminal in a network-initiated NBIFOM mode.

S403. The SGW or the PGW generates K routing rules according to the bearer resource command message.

In this embodiment, after receiving the bearer resource command message, the SGW or the PGW generates the K routing rules according to the NBIFOM routing rule request in the bearer resource command message.

S404. The SGW or the PGW sends an update bearer request message to the SGSN.

In this embodiment, after generating the K routing rules, the SGW or the PGW sends the K routing rules to the SGSN by using the update bearer request message.

S405. The SGSN sends an update bearer response message to the SGW or the PGW.

In this embodiment, after the SGSN obtains, by using the update bearer request message sent by the SGW or the PGW, the K routing rules generated by the SGW or the PGW, the SGSN sends the routing rule reception response to the SGW or the PGW by using the update bearer response message.

S406. The SGW or the PGW starts timing when receiving the update bearer response message.

In this embodiment, when receiving the update bearer response message carrying the routing rule reception response, the SGW or the PGW starts timing according to the bearer resource command message carrying the routing rule timing instruction.

S407. The SGSN sends a modify PDP context accept message to the terminal.

In this embodiment, after sending the routing rule reception response to the SGW or the PGW by using the update bearer response message, the SGSN sends the K routing rules to the terminal by using the modify PDP context accept message.

S408. The terminal sends a modify PDP context request message to the SGSN.

In this embodiment, after the terminal obtains, by using the modify PDP context accept message sent by the SGSN, the K routing rules generated by the SGW or the PGW, the terminal sends routing rule acknowledgement indication information to the SGSN by using the modify PDP context request message.

S409. The SGSN sends a bearer resource command message to the SGW or the PGW.

In this embodiment, the SGSN obtains the routing rule acknowledgement indication information by using the modify PDP context request message sent by the terminal, and then sends the routing rule acknowledgement indication information to the SGW or the PGW by using the bearer resource command message.

S410. If the SGW or the PGW receives, before a timing time reaches a preset time, the bearer resource command message sent by the SGSN, the SGW or the PGW determines, according to the bearer resource command message, a routing rule rejected by the terminal in the K routing rules.

In this embodiment, if the bearer resource command message carrying the routing rule acknowledgement indication information and sent by the SGSN is received before the timing time reaches the preset time, the SGW or the PGW obtains the routing rule acknowledgement indication information in the bearer resource command message, and may determine, according to the routing rule acknowledgement indication information, the routing rule rejected by the terminal in the K routing rules. Then the gateway device does not use N routing rules rejected by the terminal to transmit a traffic flow, but uses M routing rules acknowledged by the terminal to transmit the traffic flow. This ensures consistency of routing rules used by the gateway device and the terminal, and ensures correct transmission of the traffic flow. Optionally, if the bearer resource command message carrying the routing rule acknowledgement indication information and sent by the SGSN is not received before the timing time reaches the preset time, the SGW or the PGW determines all the K routing rules as enforceable routing rules. Then the gateway device may transmit a traffic flow by using the K routing rules.

S411. The SGW or the PGW sends an update bearer request message to the SGSN.

S412. The SGSN sends a modify PDP context accept message to the terminal.

In this embodiment, after performing S410, the SGW or the PGW sends the update bearer request message to the SGSN. The SGSN receives the update bearer request message sent by the SGW or the PGW, and sends the modify PDP context accept message to the terminal.

After receiving the K routing rules by using the modify PDP context accept message, the terminal in this embodiment additionally initiates a PDP context modification process to send the routing rule acknowledgement indication information to the gateway device.

On a basis of the method for routing rule transmission as shown in Embodiment 5 of the present invention, optionally, if the terminal sends the NBIFOM routing rule request to the gateway device through a trusted WLAN, the gateway device is the SGW or the PGW. Correspondingly, the SGSN in the foregoing method Embodiment 5 is a TWAG, the modify PDP context request message is a WLCP PDN connection modification request message, and the modify PDP context accept message is a WLCP PDN connection modification response message.

On a basis of the method for routing rule transmission as shown in Embodiment 5 of the present invention, optionally, if the terminal sends the NBIFOM routing rule request to the gateway device through an untrusted WLAN, the gateway device is the SGW or the PGW. Correspondingly, the SGSN in the foregoing method Embodiment 5 is an ePDG, the modify PDP context request message is an IKEv2 informational request message, and the modify PDP context accept message is an IKEv2 informational response.

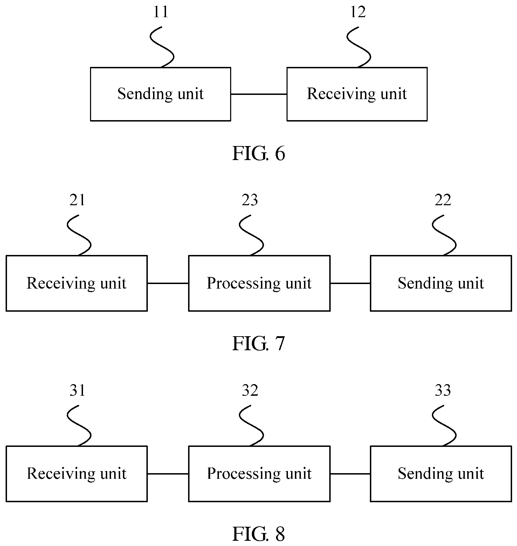

FIG. 6 is a schematic structural diagram of a terminal according to Embodiment 1 of the present invention. As shown in FIG. 6, the terminal in this embodiment may include a sending unit 11 and a receiving unit 12. The sending unit 11 is configured to send an NBIFOM routing rule request to an intermediate network device, where the NBIFOM routing rule request includes a routing rule generation parameter. The receiving unit 12 is configured to receive K routing rules sent by the intermediate network device, where K is an integer greater than or equal to 1. The sending unit 11 is further configured to send routing rule acknowledgement indication information to the intermediate network device, where the routing rule acknowledgement indication information includes at least one of the following: identifiers of M routing rules acknowledged by the terminal in the K routing rules and identifiers of N rejected routing rules, where a sum of M and N is equal to K.

Optionally, before sending the NBIFOM routing rule request to the intermediate network device, the sending unit 11 is further configured to: in a process of establishing a PDN connection between the terminal and a gateway device, send a PDN connection establishment request to the gateway device through the intermediate network device, where the PDN connection establishment request carries an NBIFOM mode indication, and the NBIFOM mode indication is used to indicate that a current NBIFOM mode is a network-initiated NBIFOM mode or a terminal-initiated NBIFOM mode, so that the intermediate network device records the current NBIFOM mode.

The terminal in this embodiment may be configured to execute the technical solution executed by the terminal in each of the foregoing method embodiments of the present invention. An implementation principle and a technical effect thereof are similar, and are not further described herein.

FIG. 7 is a schematic structural diagram of an intermediate network device according to Embodiment 1 of the present invention. As shown in FIG. 7, the intermediate network device in this embodiment may include a receiving unit 21 and a sending unit 22. The receiving unit 21 is configured to receive an NBIFOM routing rule request sent by a terminal, where the NBIFOM routing rule request includes a routing rule generation parameter. The sending unit 22 is configured to send the NBIFOM routing rule request to a gateway device. The receiving unit 21 is further configured to receive K routing rules that are generated by the gateway device according to the NBIFOM routing rule request, where K is an integer greater than or equal to 1. The sending unit 22 is further configured to send the K routing rules to the terminal. The receiving unit 21 is further configured to receive routing rule acknowledgement indication information sent by the terminal, where the routing rule acknowledgement indication information includes at least one of the following: identifiers of M routing rules acknowledged by the terminal in the K routing rules and identifiers of N rejected routing rules, where a sum of M and N is equal to K. The sending unit 22 is further configured to send the routing rule acknowledgement indication information to the gateway device.

Optionally, after the receiving unit 21 receives the NBIFOM routing rule request sent by the terminal, the sending unit 22 is further configured to send a routing rule timing instruction to the gateway device; and
after the receiving unit 21 receives the K routing rules that are generated by the gateway device according to the routing rule request, the sending unit 22 is further configured to send a routing rule reception response to the gateway device; where
the routing rule timing instruction is used to instruct the gateway device to: start timing when the gateway device receives the routing rule reception response, and determine an enforceable routing rule according to the routing rule acknowledgement indication information if the routing rule acknowledgement indication information is received before a timing time reaches the preset time, or determine the K routing rules as enforceable routing rules if the routing rule acknowledgement indication information is not received before a timing time reaches the preset time.

Optionally, the intermediate network device in this embodiment may further include a processing unit 23, where before the sending unit 22 sends the K routing rules to the terminal, the processing unit 23 is configured to determine that the NBIFOM routing rule request is sent by the terminal in a network-initiated NBIFOM mode.

Optionally, in a first feasible implementation, before receiving the NBIFOM routing rule request sent by the terminal, the receiving unit 21 is further configured to: in a process of establishing a PDN connection between the terminal and the gateway device, receive a PDN connection establishment request sent by the terminal to the gateway device, where the PDN connection establishment request includes an NBIFOM container, and the NBIFOM container carries an NBIFOM mode indication; or receive a PDN connection establishment response sent by the gateway device to the terminal, where the PDN connection establishment response includes an NBIFOM container, and the NBIFOM container carries an NBIFOM mode indication; where the NBIFOM mode indication is used to indicate that a current NBIFOM mode is the network-initiated NBIFOM mode or a terminal-initiated NBIFOM mode;
the processing unit 23 is further configured to parse the NBIFOM container to obtain the NBIFOM mode indication, and record the current NBIFOM mode according to the NBIFOM mode indication; and
when determining that the NBIFOM routing rule request is sent by the terminal in the network-initiated NBIFOM mode, the processing unit 23 is specifically configured to determine, according to the current NBIFOM mode recorded as the network-initiated NBIFOM mode, that the NBIFOM routing rule request is sent by the terminal in the network-initiated NBIFOM mode.

In a second feasible implementation, before receiving the NBIFOM routing rule request sent by the terminal, the receiving unit 21 is further configured to: in a process of establishing a PDN connection between the terminal and the gateway device, receive a PDN connection establishment request sent by the terminal to the gateway device, where the PDN connection establishment request carries an NBIFOM mode indication; or receive a PDN connection establishment response sent by the gateway device to the terminal, where the PDN connection establishment response carries an NBIFOM mode indication; where the NBIFOM mode indication is used to indicate that a current NBIFOM mode is the network-initiated NBIFOM mode or a terminal-initiated NBIFOM mode;
the processing unit 23 is further configured to record the current NBIFOM mode according to the NBIFOM mode indication; and
when determining that the NBIFOM routing rule request is sent by the terminal in the network-initiated NBIFOM mode, the processing unit 23 is specifically configured to determine, according to the current NBIFOM mode recorded as the network-initiated NBIFOM mode, that the NBIFOM routing rule request is sent by the terminal in the network-initiated NBIFOM mode.

In a third feasible implementation, the NBIFOM routing rule request further includes a first indication, and the first indication is used to indicate whether a current access network is available to the terminal, or used to indicate that a traffic flow of the terminal in the current corresponding access network needs to be transferred from an RAN to a WLAN or from a WLAN to an RAN, or used to indicate that a type of the NBIFOM routing rule request is a traffic flow mapping request; and
when determining that the NBIFOM routing rule request is sent by the terminal in the network-initiated NBIFOM mode, the processing unit 23 is specifically configured to determine, according to the first indication, that the NBIFOM routing rule request is sent by the terminal in the network-initiated NBIFOM mode.

The intermediate network device in this embodiment may be configured to execute the technical solution executed by the intermediate network device in each of the foregoing method embodiments of the present invention. An implementation principle and a technical effect thereof are similar, and are not further described herein.

FIG. 8 is a schematic structural diagram of a gateway device according to Embodiment 1 of the present invention. As shown in FIG. 8, the gateway device in this embodiment may include a receiving unit 31, a processing unit 32, and a sending unit 33. The receiving unit 31 is configured to receive an NBIFOM routing rule request sent by an intermediate network device, where the NBIFOM routing rule request includes a routing rule generation parameter. The processing unit 32 is configured to generate K routing rules according to the NBIFOM routing rule request, where K is an integer greater than or equal to 1. The sending unit 33 is configured to send the K routing rules to the intermediate network device. The receiving unit 31 is further configured to receive routing rule acknowledgement indication information sent by the intermediate network device, where the routing rule acknowledgement indication information includes at least one of the following: identifiers of M routing rules acknowledged by a terminal in the K routing rules and identifiers of N rejected routing rules, where a sum of M and N is equal to K. The processing unit 32 is further configured to determine, according to the routing rule acknowledgement indication information, the N routing rules rejected by the terminal in the K routing rules.

Optionally, after receiving the NBIFOM routing rule request sent by the intermediate network device, the receiving unit 31 is further configured to receive a routing rule timing instruction sent by the intermediate network device;
after the sending unit 33 sends the K routing rules to the intermediate network device, the receiving unit 31 is further configured to receive a routing rule reception response sent by the intermediate network device;
the processing unit 32 is further configured to start timing according to the routing rule timing instruction when the routing rule reception response is received; and
when receiving the routing rule acknowledgement indication information sent by the intermediate network device, the receiving unit 31 is specifically configured to receive the routing rule acknowledgement indication information before a timing time reaches a preset time.

Optionally, if determining that the receiving unit 31 does not receive the routing rule acknowledgement indication information before the timing time reaches the preset time, the processing unit 32 is further configured to determine that the K routing rules are enforceable routing rules.

Optionally, before the receiving unit 31 receives the NBIFOM routing rule request sent by the intermediate network device, the sending unit 33 is further configured to: in a process of establishing a PDN connection between the gateway device and the terminal, send a PDN connection establishment response to the terminal through the intermediate network device, where the PDN connection establishment response carries an NBIFOM mode indication, and the NBIFOM mode indication is used to indicate that a current NBIFOM mode is a network-initiated NBIFOM mode or a terminal-initiated NBIFOM mode, so that the intermediate network device records the current NBIFOM mode.

The gateway device in this embodiment may be configured to execute the technical solution executed by the gateway device in each of the foregoing method embodiments of the present invention. An implementation principle and a technical effect thereof are similar, and are not further described herein.

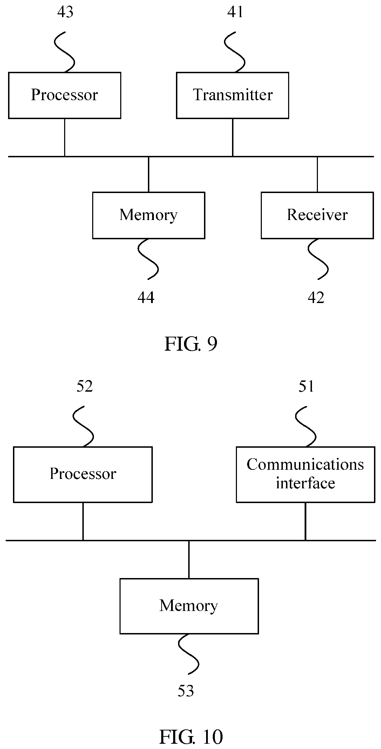

FIG. 9 is a schematic structural diagram of a terminal according to Embodiment 2 of the present invention. As shown in FIG. 9, the terminal in this embodiment may include a transmitter 41, a receiver 42, a processor 43, and a memory 44. The memory 44 is configured to store program code for performing a method for routing rule transmission. The processor 43 is configured to invoke the program code in the memory 44 to perform:
sending an NBIFOM routing rule request to an intermediate network device by using the transmitter 41, where the NBIFOM routing rule request includes a routing rule generation parameter; receiving, by using the receiver 42, K routing rules sent by the intermediate network device, where K is an integer greater than or equal to 1; and sending routing rule acknowledgement indication information to the intermediate network device by using the transmitter 41, where the routing rule acknowledgement indication information includes at least one of the following: identifiers of M routing rules acknowledged by the terminal in the K routing rules and identifiers of N rejected routing rules, where a sum of M and N is equal to K.

Optionally, before sending the NBIFOM routing rule request to the intermediate network device by using the transmitter 41, the processor 43 is further configured to: in a process of establishing a PDN connection between the terminal and a gateway device, send a PDN connection establishment request to the gateway device through the intermediate network device by using the transmitter 41, where the PDN connection establishment request carries an NBIFOM mode indication, and the NBIFOM mode indication is used to indicate that a current NBIFOM mode is a network-initiated NBIFOM mode or a terminal-initiated NBIFOM mode, so that the intermediate network device records the current NBIFOM mode.

The terminal in this embodiment may be configured to execute the technical solution executed by the terminal in each of the foregoing method embodiments of the present invention. An implementation principle and a technical effect thereof are similar, and are not further described herein.

FIG. 10 is a schematic structural diagram of an intermediate network device according to Embodiment 2 of the present invention. As shown in FIG. 10, the intermediate network device in this embodiment may include a communications interface 51, a processor 52, and a memory 53. The memory 53 is configured to store program code for performing a method for routing rule transmission. The processor 52 is configured to invoke the program code in the memory 53 to perform:
receiving, by using the communications interface 51, an NBIFOM routing rule request sent by a terminal, and sending the NBIFOM routing rule request to a gateway device by using the communications interface 51, where the NBIFOM routing rule request includes a routing rule generation parameter; receiving, by using the communications interface 51, K routing rules that are generated by the gateway device according to the NBIFOM routing rule request, and sending the K routing rules to the terminal by using the communications interface 51, where K is an integer greater than or equal to 1; and receiving, by using the communications interface 51, routing rule acknowledgement indication information sent by the terminal, and sending the routing rule acknowledgement indication information to the gateway device by using the communications interface 51, where the routing rule acknowledgement indication information includes at least one of the following: identifiers of M routing rules acknowledged by the terminal in the K routing rules and identifiers of N rejected routing rules, where a sum of M and N is equal to K.

Optionally, after receiving, by using the communications interface 51, the NBIFOM routing rule request sent by the terminal, the processor 52 is further configured to send a routing rule timing instruction to the gateway device by using the communications interface 51; and
after receiving, by using the communications interface 51, the K routing rules that are generated by the gateway device according to the routing rule request, the processor 52 is further configured to send a routing rule reception response to the gateway device by using the communications interface 51; where
the routing rule timing instruction is used to instruct the gateway device to: start timing when the gateway device receives the routing rule reception response, and determine an enforceable routing rule according to the routing rule acknowledgement indication information if the routing rule acknowledgement indication information is received before a timing time reaches the preset time, or determine the K routing rules as enforceable routing rules if the routing rule acknowledgement indication information is not received before a timing time reaches the preset time.

Optionally, before sending the K routing rules to the terminal by using the communications interface 51, the processor 52 is further configured to determine that the NBIFOM routing rule request is sent by the terminal in a network-initiated NBIFOM mode.

Optionally, in a first feasible implementation, before receiving, by using the communications interface 51, the NBIFOM routing rule request sent by the terminal, the processor 52 is further configured to: in a process of establishing a PDN connection between the terminal and the gateway device, receive, by using the communications interface 51, a PDN connection establishment request sent by the terminal to the gateway device, where the PDN connection establishment request includes an NBIFOM container, and the NBIFOM container carries an NBIFOM mode indication; or receive, by using the communications interface 51, a PDN connection establishment response sent by the gateway device to the terminal, where the PDN connection establishment response includes an NBIFOM container, and the NBIFOM container carries an NBIFOM mode indication; where the NBIFOM mode indication is used to indicate that a current NBIFOM mode is the network-initiated NBIFOM mode or a terminal-initiated NBIFOM mode;
the processor 52 is further configured to parse the NBIFOM container to obtain the NBIFOM mode indication, and record the current NBIFOM mode according to the NBIFOM mode indication; and
when determining that the NBIFOM routing rule request is sent by the terminal in the network-initiated NBIFOM mode, the processor 52 is specifically configured to determine, according to the current NBIFOM mode recorded as the network-initiated NBIFOM mode, that the NBIFOM routing rule request is sent by the terminal in the network-initiated NBIFOM mode.

In a second feasible implementation, before receiving, by using the communications interface 51, the NBIFOM routing rule request sent by the terminal, the processor 52 is further configured to: in a process of establishing a PDN connection between the terminal and the gateway device, receive, by using the communications interface 51, a PDN connection establishment request sent by the terminal to the gateway device, where the PDN connection establishment request carries an NBIFOM mode indication; or receive, by using the communications interface 51, a PDN connection establishment response sent by the gateway device to the terminal, where the PDN connection establishment response carries an NBIFOM mode indication; where the NBIFOM mode indication is used to indicate that a current NBIFOM mode is the network-initiated NBIFOM mode or a terminal-initiated NBIFOM mode;
the processor 52 is further configured to record the current NBIFOM mode according to the NBIFOM mode indication; and
when determining that the NBIFOM routing rule request is sent by the terminal in the network-initiated NBIFOM mode, the processor 52 is specifically configured to determine, according to the current NBIFOM mode recorded as the network-initiated NBIFOM mode, that the NBIFOM routing rule request is sent by the terminal in the network-initiated NBIFOM mode.

In a third feasible implementation, the NBIFOM routing rule request further includes a first indication, and the first indication is used to indicate whether a current access network is available to the terminal, or used to indicate that a traffic flow of the terminal in the current corresponding access network needs to be transferred from an RAN to a WLAN or from a WLAN to an RAN, or used to indicate that a type of the NBIFOM routing rule request is a traffic flow mapping request; and
when determining that the NBIFOM routing rule request is sent by the terminal in the network-initiated NBIFOM mode, the processor 52 is specifically configured to determine, according to the first indication, that the NBIFOM routing rule request is sent by the terminal in the network-initiated NBIFOM mode.

The intermediate network device in this embodiment may be configured to execute the technical solution executed by the intermediate network device in each of the foregoing method embodiments of the present invention. An implementation principle and a technical effect thereof are similar, and are not further described herein.

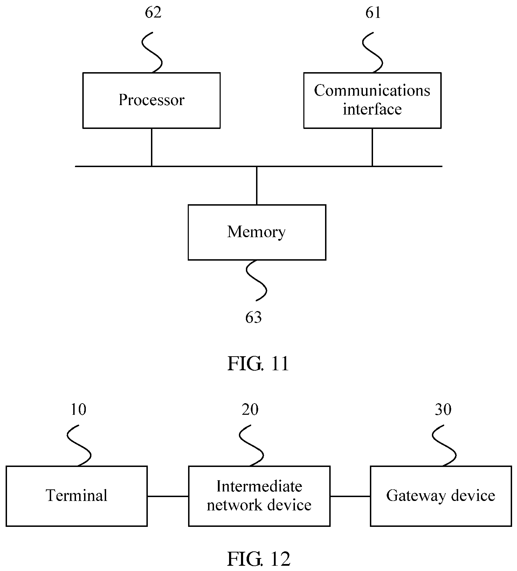

FIG. 11 is a schematic structural diagram of a gateway device according to Embodiment 2 of the present invention. As shown in FIG. 11, the gateway device in this embodiment may include a communications interface 61, a processor 62, and a memory 63. The memory 63 is configured to store program code for performing a method for routing rule transmission. The processor 62 is configured to invoke the program code in the memory 63 to perform:
receiving, by using the communications interface 61, an NBIFOM routing rule request sent by an intermediate network device, where the NBIFOM routing rule request includes a routing rule generation parameter; generating K routing rules according to the NBIFOM routing rule request, where K is an integer greater than or equal to 1; sending the K routing rules to the intermediate network device by using the communications interface 61; receiving, by using the communications interface 61, routing rule acknowledgement indication information sent by the intermediate network device, where the routing rule acknowledgement indication information includes at least one of the following: identifiers of M routing rules acknowledged by a terminal in the K routing rules and identifiers of N rejected routing rules, where a sum of M and N is equal to K; and determining, according to the routing rule acknowledgement indication information, the N routing rules rejected by the terminal in the K routing rules.

Optionally, after receiving, by using the communications interface 61, the NBIFOM routing rule request sent by the intermediate network device, the processor 62 is further configured to receive, by using the communications interface 61, a routing rule timing instruction sent by the intermediate network device;
after sending the K routing rules to the intermediate network device by using the communications interface 61, the processor 62 is further configured to receive, by using the communications interface 61, a routing rule reception response sent by the intermediate network device;
the processor 62 is further configured to start timing according to the routing rule timing instruction when the routing rule reception response is received; and
when receiving, by using the communications interface 61, the routing rule acknowledgement indication information sent by the intermediate network device, the processor 62 is specifically configured to receive the routing rule acknowledgement indication information by using the communications interface 61 before a timing time reaches the preset time.

Optionally, if determining that the routing rule acknowledgement indication information is not received by using the communications interface 61 before the timing time reaches the preset time, the processor 62 is further configured to determine that the K routing rules are enforceable routing rules.

Optionally, before receiving, by using the communications interface 61, the NBIFOM routing rule request sent by the intermediate network device, the processor 62 is further configured to: in a process of establishing a PDN connection between the gateway device and the terminal, send a PDN connection establishment response to the terminal through the intermediate network device by using the communications interface 61, where the PDN connection establishment response carries an NBIFOM mode indication, and the NBIFOM mode indication is used to indicate that a current NBIFOM mode is a network-initiated NBIFOM mode or a terminal-initiated NBIFOM mode, so that the intermediate network device records the current NBIFOM mode.

The gateway device in this embodiment may be configured to execute the technical solution executed by the gateway device in each of the foregoing method embodiments of the present invention. An implementation principle and a technical effect thereof are similar, and are not further described herein.

FIG. 12 is a schematic structural diagram of a system for routing rule transmission according to an embodiment of the present invention. As shown in FIG. 12, the system in this embodiment includes a terminal 10, an intermediate network device 20, and a gateway device 30. The terminal 10 may use a structure of the terminal provided by Embodiment 1 or Embodiment 2 of the present invention, and the terminal 10 may correspondingly execute the technical solution executed by the terminal in each of the foregoing method embodiments of the present invention. An implementation principle and a technical effect thereof are similar, and are not further described herein. The intermediate network device 20 may use a structure of the intermediate network device provided by Embodiment 1 or Embodiment 2 of the present invention, and the intermediate network device 20 may correspondingly execute the technical solution executed by the intermediate network device in each of the foregoing method embodiments of the present invention. An implementation principle and a technical effect thereof are similar, and are not further described herein. The gateway device 30 may use a structure of the gateway device provided by Embodiment 1 or Embodiment 2 of the present invention, and the gateway device 30 may correspondingly execute the technical solution executed by the gateway device in each of the foregoing method embodiments of the present invention. An implementation principle and a technical effect thereof are similar, and are not further described herein. It should be noted that, the terminal 10 communicates with the intermediate network device 20 through an access network (not shown in the figure). Depending on different access networks, the intermediate network device 20 also varies correspondingly.

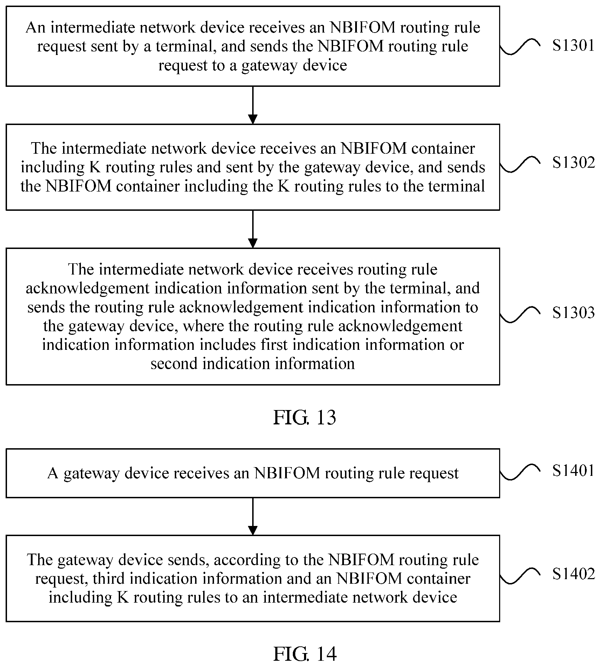

FIG. 13 is a flowchart of a method for routing rule transmission according to Embodiment 6 of the present invention. As shown in FIG. 13, the method includes the following steps.

S1301. An intermediate network device receives an NBIFOM routing rule request sent by a terminal, and sends the NBIFOM routing rule request to a gateway device.

The NBIFOM routing rule request may include a routing rule generation parameter. Specifically, the routing rule generation parameter may include at least one of an IP flow mapping (IP flow mapping), an RAN rule indication, or an access network unavailability/availability indication. Specifically, if a network agrees to the IP flow mapping carried in the NBIFOM routing rule request, the network generates a routing rule according to the IP flow mapping. The RAN rule indication is used to indicate whether to allow a handover between heterogeneous networks, for example, a handover from 3GPP to a WLAN or a handover from a WLAN to 3GPP. The access network availability/unavailability indication is used to indicate whether an access network is available. If the access network availability/unavailability indication indicates that the access network is unavailable, all services of the access network are handed over to another access network.

In addition, the NBIFOM routing rule request includes an NBIFOM container. The intermediate network device may identify, by determining whether a message sent by the terminal carries the NBIFOM container, whether the message is an NBIFOM routing rule request message, that is, if the message sent by the terminal carries the NBIFOM container, the intermediate network device considers that the message is the NBIFOM routing rule request.

S1302. The intermediate network device receives an NBIFOM container including K routing rules and sent by the gateway device, and sends the NBIFOM container including the K routing rules to the terminal.

K is an integer greater than or equal to 1.

S1303. The intermediate network device receives routing rule acknowledgement indication information sent by the terminal, and sends the routing rule acknowledgement indication information to the gateway device, where the routing rule acknowledgement indication information includes first indication information or second indication information.

The first indication information is used to indicate that the terminal accepts the K routing rules, and the second indication information is used to indicate that the terminal rejects at least one of the K routing rules.

Optionally, in a first implementation scenario of the this embodiment, after step S1301, the method further includes: the intermediate network device determines whether third indication information is received from the gateway device; and if the intermediate network device determines that the third indication information is received from the gateway device, the intermediate network device sends an acknowledgement message to the terminal.

The third indication information is used to instruct the intermediate network device to send an acknowledgement message that does not carry any routing rule to the terminal. The acknowledgement message does not carry the NBIFOM container including the K routing rules, and the acknowledgement message is used to acknowledge reception of the NBIFOM routing rule request sent by the terminal.

Optionally, in a second implementation scenario of the this embodiment, that the intermediate network device sends the NBIFOM container including the K routing rules to the terminal in step S1302 includes:
the intermediate network device determines whether third indication information is received from the gateway device; and if the intermediate network device determines that the third indication information is received from the gateway device, the intermediate network device sends a first request message to the terminal, where the first request message carries the NBIFOM container including the K routing rules.

The third indication information is used to indicate that a feedback of the terminal is required for an NBIFOM container sent by the intermediate network device, or the third indication information is used to instruct the intermediate network device to send an NBIFOM container to the terminal by using a request message.

Specifically, the first request message may be a request secondary packet data protocol (Packet Data Protocol, PDP) context activation message or a modify PDP context request message.

Further, based on the second implementation scenario, the method may include:
S1304. The intermediate network device sends an acknowledgement message to the terminal, where the acknowledgement message does not carry the NBIFOM container including the K routing rules, and the acknowledgement message is used to acknowledge reception of the NBIFOM routing rule request sent by the terminal.

It should be noted that, an execution sequence of steps S 1304, S 1302, and S1303 in this embodiment of the present invention may be changed and is not limited.

Optionally, based on the this embodiment or the first or the second implementation scenario of the this embodiment, the method further includes:
S1305. The intermediate network device receives the third indication information from the gateway device.

The third indication information and the NBIFOM container including the K routing rules may be both carried in a create bearer request message or an update bearer request message; or the third indication information is carried in a create session response message, and the NBIFOM container including the K routing rules is carried in a create bearer request message or an update bearer request message.

It should be noted that, for descriptions about the routing rules, the gateway device, and the intermediate network device, reference may be made to other embodiments of the present invention. Details are not further described herein.

In the foregoing solution of this embodiment, the gateway device determines, according to the routing rule acknowledgement indication information, a routing rule accepted by the terminal, and transmits a traffic flow by using the routing rule accepted by the terminal. This ensures consistency of routing rules used by the gateway device and the terminal, and ensures correct transmission of the traffic flow.

FIG. 14 is a flowchart of a method for routing rule transmission according to Embodiment 7 of the present invention. As shown in FIG. 14, the method includes the following steps.

S1401. A gateway device receives an NBIFOM routing rule request.

S1402. The gateway device sends, according to the NBIFOM routing rule request, third indication information and an NBIFOM container including K routing rules to an intermediate network device.

K is an integer greater than or equal to 1, and the third indication information is used to instruct the intermediate network device to send an acknowledgement message that does not carry any routing rule to a terminal, or the third indication information is used to indicate that a feedback of a terminal is required for an NBIFOM container sent by the intermediate network device, or the third indication information is used to instruct the intermediate network device to send an NBIFOM container to a terminal by using a request message.

Optionally, the NBIFOM routing rule request includes a routing rule generation parameter of the terminal. The routing rule generation parameter may include at least one of an IP flow mapping (IP flow mapping), an RAN rule indication, or an access network unavailability/availability indication. Specifically, if a network agrees to the IP flow mapping carried in the NBIFOM routing rule request, the network generates a routing rule according to the IP flow mapping. The RAN rule indication is used to indicate whether to allow a handover between heterogeneous networks, for example, a handover from 3GPP to a WLAN or a handover from a WLAN to 3GPP. The access network availability/unavailability indication is used to indicate whether an access network is available. If the access network availability/unavailability indication indicates that the access network is unavailable, all services of the access network are handed over to another access network.

A feasible implementation of the foregoing S1402 in which the gateway device sends, according to the NBIFOM routing rule request, the NBIFOM container including K routing rules to the intermediate network device is: the gateway device generates the K routing rules according to the NBIFOM routing rule request, and then sends the NBIFOM container including the K routing rules to the intermediate network device. Optionally, if the NBIFOM routing rule request includes the routing rule generation parameter of the terminal, that the gateway device generates the K routing rules according to the NBIFOM routing rule request includes: generating the K routing rules according to the routing rule generation parameter of the terminal.

Another feasible implementation of the foregoing S1402 in which the gateway device sends, according to the NBIFOM routing rule request, the NBIFOM container including K routing rules to the intermediate network device is: the gateway device sends a policy and charging control (English: Policy Control and Charging, PCC for short) rule request to a PCRF according to the NBIFOM routing rule request; and then the gateway device receives a PCC rule generated by the PCRF, generates the K routing rules according to the PCC rule, and then sends the NBIFOM container including the K routing rules to the intermediate network device. Optionally, the gateway device may send the PCC rule request to the PCRF by using an IP-connectivity access network (English: IP-Connectivity Access Network, IP-CAN for short) session modification indication message, for example, the IP-CAN session modification indication message carries the PCC rule request; and the gateway device receives, by using an acknowledge IP-CAN session modification message (English: Acknowledge IP-CAN Session Modification), the PCC rule sent by the PCRF, for example, the acknowledge IP-CAN session modification message carries the PCC rule.

In this embodiment, the gateway device sends the third indication information and the NBIFOM container including the K routing rules to the intermediate network device; and correspondingly, for an operation after the intermediate network device receives the third indication information and the NBIFOM container including the K routing rules that are sent by the gateway device, refer to related descriptions in the embodiment shown in FIG. 13. Details are not further described herein.

Optionally, the third indication information and the K routing rules are both carried in a create bearer request message or an update bearer request message.

Optionally, that the gateway device sends third indication information to an intermediate network device in step S1402 includes: if a PDN connection of the terminal is in a network-initiated NBIFOM mode, the gateway device sends the third indication information to the intermediate network device.

Optionally, before step S 1401, the method further includes:
the gateway device receives mode indication information sent by the PCRF, where the mode indication information is used to indicate the mode of the PDN connection of the terminal; and the gateway device stores the mode indication information.

In the foregoing solution of this embodiment, the gateway device determines, according to routing rule acknowledgement indication information, a routing rule accepted by the terminal, and transmits a traffic flow by using the routing rule accepted by the terminal. This ensures consistency of routing rules used by the gateway device and the terminal, and ensures correct transmission of the traffic flow.

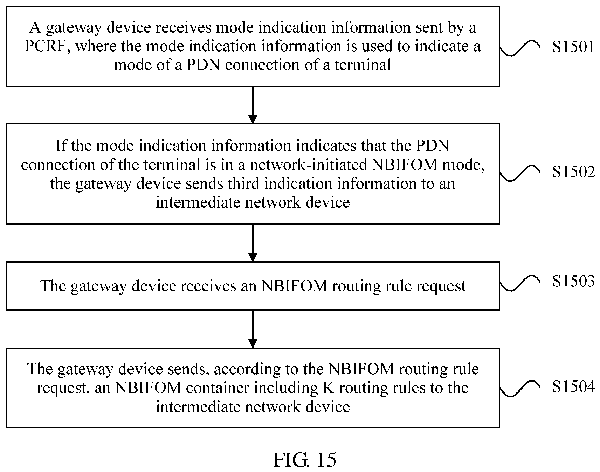

FIG. 15 is a flowchart of a method for routing rule transmission according to Embodiment 8 of the present invention. As shown in FIG. 15, the method includes the following steps.

S1501. A gateway device receives mode indication information sent by a PCRF, where the mode indication information is used to indicate a mode of a PDN connection of a terminal.

S1502. If the mode indication information indicates that the PDN connection of the terminal is in a network-initiated NBIFOM mode, the gateway device sends third indication information to an intermediate network device.

The third indication information is used to instruct the intermediate network device to send an acknowledgement message that does not carry any routing rule to the terminal, or the third indication information is used to indicate that a feedback of the terminal is required for an NBIFOM container sent by the intermediate network device, or the third indication information is used to instruct the intermediate network device to send an NBIFOM container to the terminal by using a request message.

The third indication information may be carried in a create session response message and sent to the intermediate network device.

S1503. The gateway device receives an NBIFOM routing rule request.

For details about the NBIFOM routing rule request, refer to related descriptions in the embodiment shown in FIG. 14.

It should be noted that, S1503 is performed after S1502 in this embodiment, and other actions may be further performed between S1502 and S1503.

S1504. The gateway device sends, according to the NBIFOM routing rule request, an NBIFOM container including K routing rules to the intermediate network device.

For step S1504, refer to related descriptions in step S1402 in the embodiment shown in FIG. 14.

Correspondingly, for an operation behavior after the intermediate network device receives the third indication information sent by the gateway device and an operation behavior after the intermediate network device receives the NBIFOM container including the K routing rules, refer to related descriptions in the embodiment shown in FIG. 13. Details are not further described herein.

In the foregoing solution of this embodiment, the gateway device determines, according to routing rule acknowledgement indication information, a routing rule accepted by the terminal, and transmits a traffic flow by using the routing rule accepted by the terminal. This ensures consistency of routing rules used by the gateway device and the terminal, and ensures correct transmission of the traffic flow.

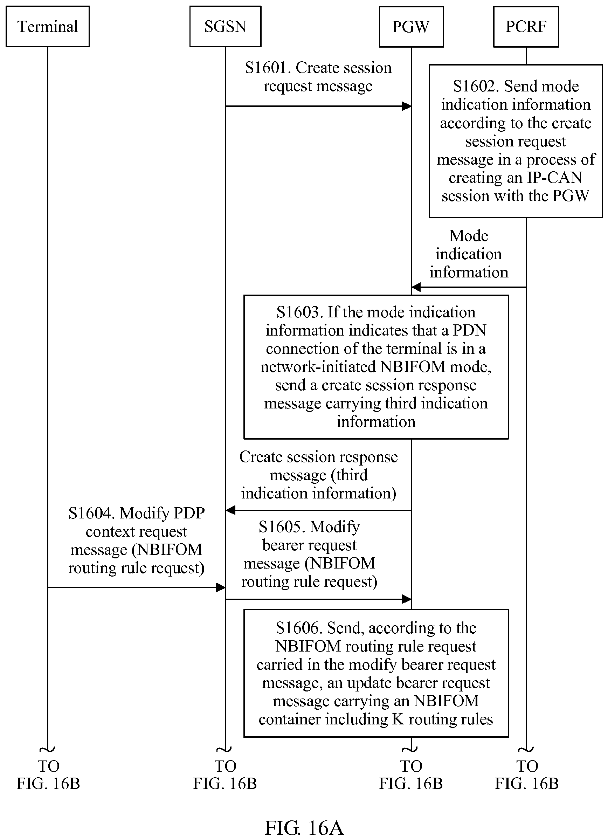

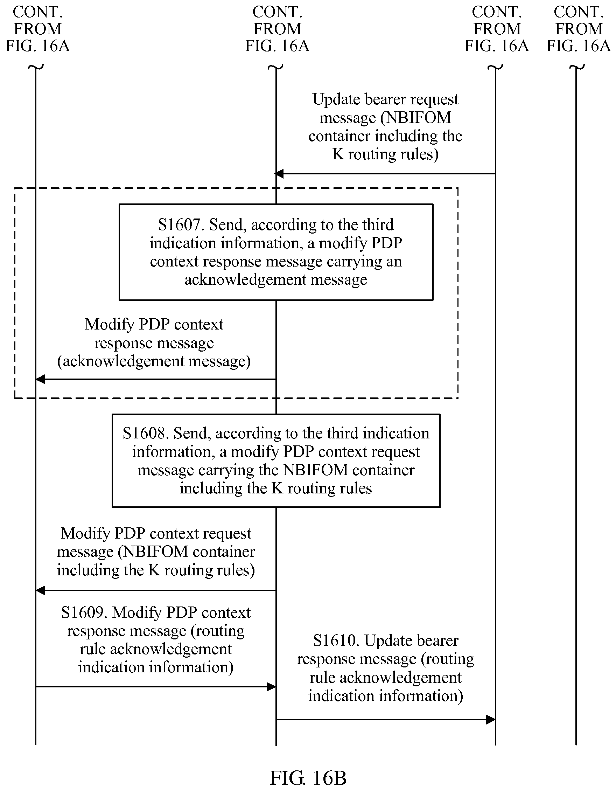

FIG. 16A and FIG. 16B are a flowchart of a method for routing rule transmission according to Embodiment 9 of the present invention. As shown in FIG. 16A and FIG. 16B, in this embodiment, for example, a terminal sends an NBIFOM routing rule request to a gateway device through an RAN, the gateway device is a PGW, and correspondingly, an intermediate network device is an SGSN. The method in this embodiment may include the following steps.

S1601. An SGSN sends a create session request message to a PGW.

S1602. A PCRF sends mode indication information to the PGW according to the create session request message in a process of creating an IP-CAN session with the PGW.

Specifically, in an initial PDN connection establishment process, the SGSN sends the create session request message to the PGW. After receiving the create session request message, the PGW receives the mode indication information sent by the PCRF in the process of creating the IP-CAN session with the PCRF. The mode indication information is used to indicate a mode of a PDN connection of a terminal. For example, the PDN connection of the terminal is in a network-initiated NBIFOM mode.

S1603. If the mode indication information indicates that a PDN connection of a terminal is in a network-initiated NBIFOM mode, the PGW sends a create session response message carrying third indication information to the SGSN.

The third indication information is used to instruct the SGSN to send an acknowledgement message that does not carry any routing rule to the terminal; or the third indication information is used to indicate that a feedback of the terminal is required for an NBIFOM container sent by the SGSN; or the third indication information is used to instruct the SGSN to send an NBIFOM container to the terminal by using a request message.

S1604. The terminal sends a modify PDP context request message carrying an NBIFOM routing rule request to the SGSN.

S1605. The SGSN sends a modify bearer request message carrying the NBIFOM routing rule request to the PGW.

In this embodiment, the SGSN receives the modify PDP context request message that carries the NBIFOM routing rule request and is sent by the terminal, and sends the NBIFOM routing rule request to the PGW by using the modify bearer request message.

S1606. The PGW sends, according to the NBIFOM routing rule request carried in the modify bearer request message, an update bearer request message carrying an NBIFOM container including K routing rules to the SGSN.

In this embodiment, for step S1606, refer to related descriptions in step S1402 in the embodiment shown in FIG. 14.

In this embodiment, after the SGSN receives the NBIFOM container including the K routing rules, and determines that the third indication information is received from the PGW, as described in S1603, there are the following two implementations for the SGSN.

In a first implementation, if the third indication information is used to instruct the SGSN to send the acknowledgement message that does not carry any routing rule to the terminal, in this embodiment, after S1606 is performed, the following S1607 to S1610 are performed.

S1607. The SGSN sends, according to the third indication information, a modify PDP context response message carrying an acknowledgement message to the terminal.

In this embodiment, the SGSN sends, according to the third indication information that is used to instruct the SGSN to send the acknowledgement message that does not carry any routing rule to the terminal, the acknowledgement message to the terminal by using the modify PDP context response message. The acknowledgement message does not carry the NBIFOM container including the K routing rules, and the acknowledgement message is used to acknowledge reception of the NBIFOM routing rule request sent by the terminal. In this embodiment, after S1607 is performed, S1608 to S1610 are performed.

In a second implementation, if the third indication information is used to indicate that the feedback of the terminal is required for the NBIFOM container sent by the SGSN, or the third indication information is used to instruct the SGSN to send the NBIFOM container to the terminal by using the request message, in this embodiment, after S1606 is performed, the following S1608 to S1610 are performed.

S1608. The SGSN sends, according to the third indication information, a modify PDP context request message carrying the NBIFOM container including the K routing rules to the terminal.

S1609. The terminal sends a modify PDP context response message carrying routing rule acknowledgement indication information to the SGSN.

In this embodiment, after the terminal obtains, by using the modify PDP context request message sent by the SGSN, the NBIFOM container including the K routing rules generated by the PGW, the terminal sends the routing rule acknowledgement indication information to the SGSN by using the modify PDP context response message. The routing rule acknowledgement indication information includes first indication information or second indication information, the first indication information is used to indicate that the terminal accepts the K routing rules, and the second indication information is used to indicate that the terminal rejects at least one of the K routing rules.

S1610. The SGSN sends an update bearer response message carrying the routing rule acknowledgement indication information to the PGW.

In this embodiment, the SGSN obtains the routing rule acknowledgement indication information by using the modify PDP context response message sent by the terminal, and then sends the routing rule acknowledgement indication information to the PGW by using the update bearer response message.

In this embodiment, the PGW receives the update bearer response message sent by the SGSN, obtains the routing rule acknowledgement indication information in the update bearer response message, determines, according to the routing rule acknowledgement indication information, a routing rule accepted by the terminal, and transmits a traffic flow by using the routing rule accepted by the terminal. This ensures consistency of routing rules used by the gateway device and the terminal, and ensures correct transmission of the traffic flow.

Optionally, the update bearer request message in S1606 may be a create bearer request message (English: Create Bearer Request); correspondingly, the modify PDP context request message in S1608 may be a request secondary PDP context activation message (English: Request Secondary PDP Context Activation); the modify PDP context response message in S1609 may be an activate secondary PDP context request message (English: Activate Secondary PDP Context Request); and the update bearer response message in S1610 may be a create bearer response message.

Optionally, the PGW may be replaced with an SGW. Details are not further described.

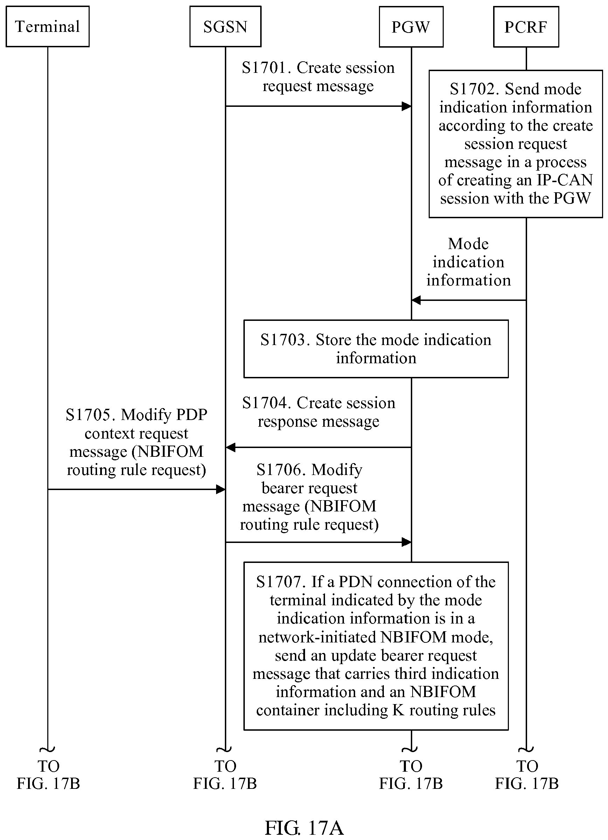

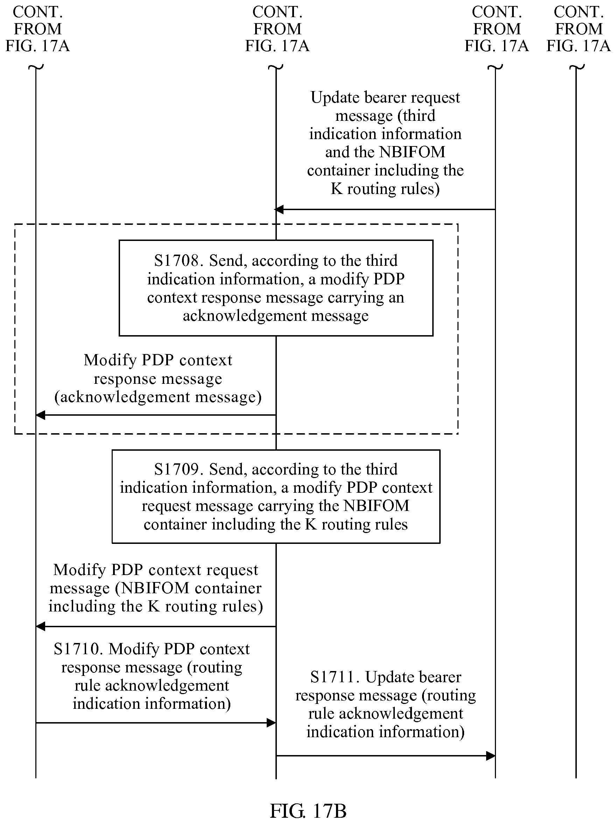

FIG. 17A and FIG. 17B are a flowchart of a method for routing rule transmission according to Embodiment 10 of the present invention. As shown in FIG. 17A and FIG. 17B, in this embodiment, for example, a terminal sends an NBIFOM routing rule request to a gateway device through an RAN, the gateway device is a PGW, and correspondingly, an intermediate network device is an SGSN. The method in this embodiment may include the following steps.

S1701. An SGSN sends a create session request message to a PGW.

S1702. A PCRF sends mode indication information to the PGW according to the create session request message in a process of creating an IP-CAN session with the PGW.

The mode indication information is used to indicate a mode of a PDN connection of a terminal. For example, the PDN connection of the terminal is in a network-initiated NBIFOM mode.

S1703. The PGW stores the mode indication information.

In this embodiment, after receiving the mode indication information sent by the PCRF, the PGW stores the mode indication information.

S1704. The PGW sends a create session response message to the SGSN.

This embodiment differs from the embodiment shown in FIG. 16A and FIG. 16B in that the create session response message does not carry third indication information.

S1705. A terminal sends a modify PDP context request message carrying an NBIFOM routing rule request to the SGSN.

S1706. The SGSN sends a modify bearer request message carrying the NBIFOM routing rule request to the PGW.

S1707. If a PDN connection of the terminal indicated by the mode indication information is in a network-initiated NBIFOM mode, the PGW sends an update bearer request message that carries third indication information and an NBIFOM container including K routing rules to the SGSN.

The third indication information is used to instruct the SGSN to send an acknowledgement message that does not carry any routing rule to the terminal; or the third indication information is used to indicate that a feedback of the terminal is required for an NBIFOM container sent by the SGSN, or the third indication information is used to instruct the SGSN to send an NBIFOM container to the terminal by using a request message.

In this embodiment, after the SGSN receives the NBIFOM container including the K routing rules, and determines that the third indication information is received from the PGW (as described in S1707), there are the following two implementations for the SGSN.

In a first implementation, if the third indication information is used to instruct the SGSN to send the acknowledgement message that does not carry any routing rule to the terminal, in this embodiment, after S1707 is performed, the following S1708 to S1711 are performed.

S1708. The SGSN sends, according to the third indication information, a modify PDP context response message carrying an acknowledgement message to the terminal.

In this embodiment, the SGSN sends, according to the third indication information that is used to instruct the SGSN to send the acknowledgement message that does not carry any routing rule to the terminal, the acknowledgement message to the terminal by using the modify PDP context response message. The acknowledgement message does not carry the NBIFOM container including the K routing rules, and the acknowledgement message is used to acknowledge reception of the NBIFOM routing rule request sent by the terminal. In this embodiment, after S1708 is performed, S1709 to S1611 are performed.

In a second implementation, if the third indication information is used to indicate that the feedback of the terminal is required for the NBIFOM container sent by the SGSN, or the third indication information is used to instruct the SGSN to send the NBIFOM container to the terminal by using the request message, in this embodiment, after S1707 is performed, the following S1709 to S1711 are performed.

S1709. The SGSN sends, according to the third indication information, a modify PDP context request message carrying the NBIFOM container including the K routing rules to the terminal.

In this embodiment, the SGSN sends the NBIFOM container including the K routing rules to the terminal by using the modify PDP context request.

S1710. The terminal sends a modify PDP context response message carrying routing rule acknowledgement indication information to the SGSN.

The routing rule acknowledgement indication information includes first indication information or second indication information, the first indication information is used to indicate that the terminal accepts the K routing rules, and the second indication information is used to indicate that the terminal rejects at least one of the K routing rules.

S1711. The SGSN sends an update bearer response message carrying the routing rule acknowledgement indication information to the PGW.

In this embodiment, the PGW receives the update bearer response message sent by the SGSN, obtains the routing rule acknowledgement indication information in the update bearer response message, determines, according to the routing rule acknowledgement indication information, a routing rule accepted by the terminal, and transmits a traffic flow by using the routing rule accepted by the terminal. This ensures consistency of routing rules used by the gateway device and the terminal, and ensures correct transmission of the traffic flow.

Optionally, the update bearer request message in S1707 may be a create bearer request message; correspondingly, the modify PDP context request message in S1709 may be a request secondary PDP context activation message (English: Request Secondary PDP Context Activation); the modify PDP context response message in S1710 may be an activate secondary PDP context request message (English: Activate Secondary PDP Context Request); and the update bearer response message in S1711 may be a create bearer response message.

Optionally, the PGW may be replaced with an SGW.

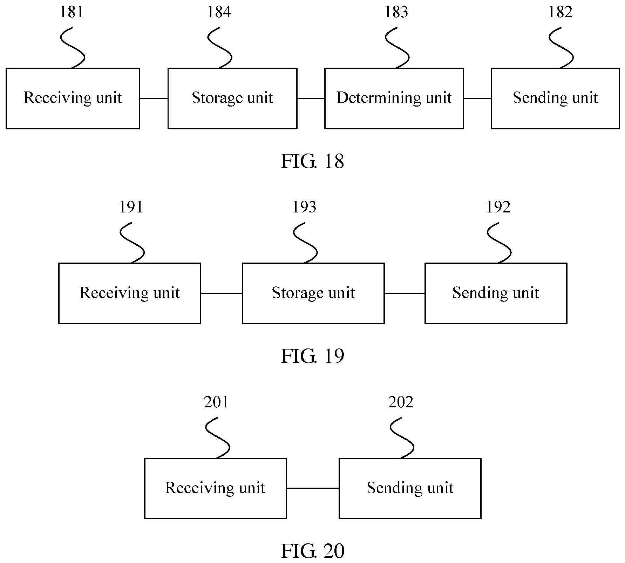

FIG. 18 is a schematic structural diagram of an intermediate network device according to Embodiment 3 of the present invention. As shown in FIG. 18, the intermediate network device in this embodiment may include a receiving unit 181 and a sending unit 182.

The receiving unit 181 is configured to receive an NBIFOM routing rule request sent by a terminal.

The sending unit 182 is configured to send the NBIFOM routing rule request received by the receiving unit 181 to a gateway device.

The receiving unit 181 is further configured to receive an NBIFOM container including K routing rules and sent by the gateway device according to the NBIFOM routing rule request, where K is an integer greater than or equal to 1.

The sending unit 182 is further configured to send the NBIFOM container including the K routing rules and received by the receiving unit 181 to the terminal.

The receiving unit 181 is further configured to receive routing rule acknowledgement indication information sent by the terminal, where the routing rule acknowledgement indication information includes first indication information or second indication information, the first indication information is used to indicate that the terminal accepts the K routing rules, and the second indication information is used to indicate that the terminal rejects at least one of the K routing rules.

The sending unit 182 is further configured to send the routing rule acknowledgement indication information received by the receiving unit 181 to the gateway device.

Optionally, the intermediate network device in this embodiment may further include a determining unit 183.

In a feasible implementation, after the receiving unit 181 receives the NBIFOM routing rule request sent by the terminal, the determining unit 183 is configured to determine whether third indication information is received from the gateway device, where the third indication information is used to instruct the intermediate network device to send an acknowledgement message that does not carry any routing rule to the terminal; and
if the determining unit 183 determines that the third indication information is received from the gateway device, the sending unit 182 is further configured to send an acknowledgement message to the terminal, where the acknowledgement message does not carry the NBIFOM container including the K routing rules, and the acknowledgement message is used to acknowledge reception of the NBIFOM routing rule request sent by the terminal.

In a second feasible implementation, the determining unit 183 is configured to determine whether third indication information is received from the gateway device, where the third indication information is used to indicate that a feedback of the terminal is required for an NBIFOM container sent by the intermediate network device, or the third indication information is used to instruct the intermediate network device to send an NBIFOM container to the terminal by using a request message; and
if the determining unit 183 determines that the third indication information is received from the gateway device, the sending unit 182 is further configured to send a first request message to the terminal, where the first request message carries the NBIFOM container including the K routing rules.

Optionally, the first request message is a request secondary PDP context activation message or a modify PDP context request message.

Optionally, the sending unit 182 is further configured to send an acknowledgement message to the terminal, where the acknowledgement message does not carry the NBIFOM container including the K routing rules, and the acknowledgement message is used to acknowledge reception of the NBIFOM routing rule request sent by the terminal.

Optionally, the receiving unit 181 is further configured to receive the third indication information from the gateway device.

Optionally, the third indication information and the NBIFOM container including the K routing rules are both carried in a create bearer request message or an update bearer request message; or
the third indication information is carried in a create session response message, and the NBIFOM container including the K routing rules is carried in a create bearer request message or an update bearer request message.

Optionally, the intermediate network device in this embodiment may further include a storage unit 184, where after the receiving unit 181 receives the third indication information from the gateway device, the storage unit 184 is configured to store the third indication information received by the receiving unit 181.

Optionally, the NBIFOM routing rule request includes an NBIFOM container.

The intermediate network device in this embodiment may be configured to execute the technical solution executed by the intermediate network device in the foregoing method embodiment of the present invention shown in FIG. 13, or FIG. 16A and FIG. 16B, or FIG. 17A and FIG. 17B. An implementation principle and a technical effect thereof are similar, and are not further described herein.

FIG. 19 is a schematic structural diagram of a gateway device according to Embodiment 3 of the present invention. As shown in FIG. 19, the gateway device in this embodiment may include a receiving unit 191 and a sending unit 192. The receiving unit 191 is configured to receive an NBIFOM routing rule request, where the NBIFOM routing rule request includes a routing rule generation parameter of a terminal. The sending unit 192 is configured to send, according to the NBIFOM routing rule request received by the receiving unit 191, third indication information and an NBIFOM container including K routing rules to an intermediate network device.

K is an integer greater than or equal to 1, and the third indication information is used to instruct the intermediate network device to send an acknowledgement message that does not carry any routing rule to the terminal, or the third indication information is used to indicate that a feedback of the terminal is required for an NBIFOM container sent by the intermediate network device, or the third indication information is used to instruct the intermediate network device to send an NBIFOM container to the terminal by using a request message.

Optionally, when sending the third indication information to the intermediate network device, the sending unit 192 is specifically configured to send the third indication information to the intermediate network device if a PDN connection of the terminal is in a network-initiated NBIFOM mode.

Optionally, the network device in this embodiment may further include a storage unit 193;
before receiving the NBIFOM routing rule request, the receiving unit 191 is further configured to receive mode indication information sent by a PCRF, where the mode indication information is used to indicate the mode of the PDN connection of the terminal; and
the storage unit 193 is configured to store the mode indication information received by the receiving unit 191.

Optionally, the third indication information and the K routing rules are carried in a create bearer request message or an update bearer request message.

The gateway device in this embodiment may be configured to execute the technical solution executed by the gateway device in the foregoing method embodiment shown in FIG. 14, or FIG. 16A and FIG. 16B, or FIG. 17A and FIG. 17B. An implementation principle and a technical effect thereof are similar, and are not further described herein.

FIG. 20 is a schematic structural diagram of a gateway device according to Embodiment 4 of the present invention. As shown in FIG. 20, the gateway device in this embodiment may include a receiving unit 201 and a sending unit 202. The receiving unit 201 is configured to receive mode indication information sent by a PCRF, where the mode indication information is used to indicate a mode of a PDN connection of a terminal. The sending unit 202 is configured to send third indication information to an intermediate network device if the mode indication information received by the receiving unit 201 indicates that the PDN connection of the terminal is in a network-initiated NBIFOM mode, where the third indication information is used to instruct the intermediate network device to send an acknowledgement message that does not carry any routing rule to the terminal, or the third indication information is used to indicate that a feedback of the terminal is required for an NBIFOM container sent by the intermediate network device, or the third indication information is used to instruct the intermediate network device to send an NBIFOM container to the terminal by using a request message.

The receiving unit 201 is further configured to receive an NBIFOM routing rule request.

The sending unit 202 is further configured to send, according to the NBIFOM routing rule request received by the receiving unit 201, an NBIFOM container including K routing rules to the intermediate network device, where K is an integer greater than or equal to 1.

Optionally, the third indication information is carried in a create session response message and sent to the intermediate network device.

The gateway device in this embodiment may be configured to execute the technical solution executed by the gateway device in the foregoing method embodiment shown in FIG. 15, or FIG. 16A and FIG. 16B, or FIG. 17A and FIG. 17B. An implementation principle and a technical effect thereof are similar, and are not further described herein.

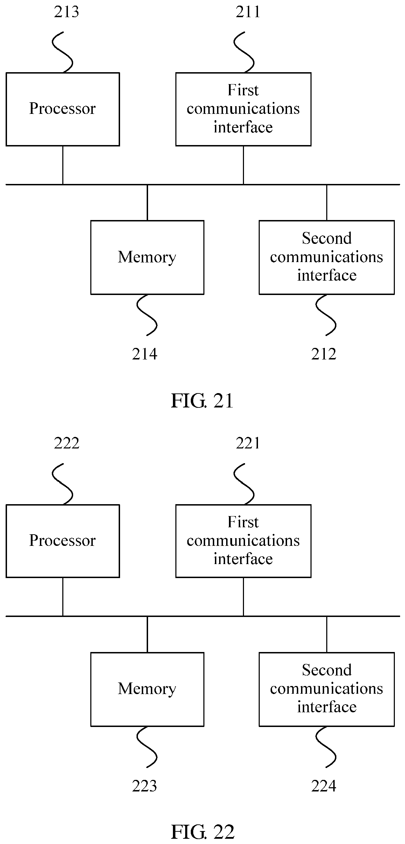

FIG. 21 is a schematic structural diagram of an intermediate network device according to Embodiment 4 of the present invention. As shown in FIG. 21, the intermediate network device in this embodiment may include a first communications interface 211, a second communications interface 212, a processor 213, and a memory 214. The memory 214 is configured to store program code for performing a method for routing rule transmission. The processor 213 is configured to invoke the program code in the memory 214 to perform:
receiving, by using the first communications interface 211, an NBIFOM routing rule request sent by a terminal, and sending the NBIFOM routing rule request to a gateway device by using the second communications interface 212; receiving, by using the second communications interface 212, an NBIFOM container including K routing rules and sent by the gateway device, and sending, by using the first communications interface 211, the NBIFOM container including the K routing rules to the terminal, where K is an integer greater than or equal to 1; and receiving, by using the first communications interface 211, routing rule acknowledgement indication information sent by the terminal, and sending the routing rule acknowledgement indication information to the gateway device by using the second communications interface 212, where the routing rule acknowledgement indication information includes first indication information or second indication information, the first indication information is used to indicate that the terminal accepts the K routing rules, and the second indication information is used to indicate that the terminal rejects at least one of the K routing rules.

Optionally, after receiving, by using the first communications interface 211, the NBIFOM routing rule request sent by the terminal, the processor 213 is further configured to: determine whether third indication information is received from the gateway device, where the third indication information is used to instruct the intermediate network device to send an acknowledgement message that does not carry any routing rule to the terminal; and if determining that the third indication information is received from the gateway device, send an acknowledgement message to the terminal by using the first communications interface 211, where the acknowledgement message does not carry the NBIFOM container including the K routing rules, and the acknowledgement message is used to acknowledge reception of the NBIFOM routing rule request sent by the terminal.

Optionally, the processor 213 is further configured to determine whether third indication information is received from the gateway device, where the third indication information is used to indicate that a feedback of the terminal is required for an NBIFOM container sent by the intermediate network device, or the third indication information is used to instruct the intermediate network device to send an NBIFOM container to the terminal by using a request message; and
when sending, by using the first communications interface 211, the NBIFOM container including the K routing rules to the terminal, the processor 213 is specifically configured to send a first request message to the terminal by using the first communications interface 211 if determining that the third indication information is received from the gateway device, where the first request message carries the NBIFOM container including the K routing rules.

Optionally, the first request message is a request secondary packet data protocol PDP context activation message or a modify PDP context request message.

Optionally, the processor 213 is further configured to send an acknowledgement message to the terminal by using the first communications interface 211, where the acknowledgement message does not carry the NBIFOM container including the K routing rules, and the acknowledgement message is used to acknowledge reception of the NBIFOM routing rule request sent by the terminal.

Optionally, the processor 213 is further configured to receive the third indication information from the gateway device by using the second communications interface 212.

Optionally, the third indication information and the NBIFOM container including the K routing rules are both carried in a create bearer request message or an update bearer request message; or
the third indication information is carried in a create session response message, and the NBIFOM container including the K routing rules is carried in a create bearer request message or an update bearer request message.

Optionally, after receiving the third indication information from the gateway device by using the second communications interface 212, the processor 213 is further configured to store the third indication information.

Optionally, the NBIFOM routing rule request includes an NBIFOM container.

The intermediate network device in this embodiment may be configured to execute the technical solution executed by the intermediate network device in the foregoing method embodiment of the present invention shown in FIG. 13, or FIG. 16A and FIG. 16B, or FIG. 17A and FIG. 17B. An implementation principle and a technical effect thereof are similar, and are not further described herein.

FIG. 22 is a schematic structural diagram of a gateway device according to Embodiment 5 of the present invention. As shown in FIG. 22, the gateway device in this embodiment may include a first communications interface 221, a processor 222, and a memory 223. The memory 223 is configured to store program code for performing a method for routing rule transmission. The processor 222 is configured to invoke the program code in the memory 223 to perform:
receiving an NBIFOM routing rule request by using the first communications interface 221; and sending, according to the NBIFOM routing rule request, third indication information and an NBIFOM container including K routing rules to an intermediate network device by using the first communications interface 221.

K is an integer greater than or equal to 1, and the third indication information is used to instruct the intermediate network device to send an acknowledgement message that does not carry any routing rule to the terminal, or the third indication information is used to indicate that a feedback of the terminal is required for an NBIFOM container sent by the intermediate network device, or the third indication information is used to instruct the intermediate network device to send an NBIFOM container to the terminal by using a request message.

Optionally, when sending the third indication information to the intermediate network device by using the first communications interface 221, the processor 222 is specifically configured to send the third indication information to the intermediate network device by using the first communications interface 221 if a PDN connection of the terminal is in a network-initiated NBIFOM mode.

Optionally, the gateway device in this embodiment further includes a second communications interface 224; and
before receiving the NBIFOM routing rule request by using the first communications interface 221, the processor 222 is further configured to: receive, by using the second communications interface 224, mode indication information sent by a PCRF, where the mode indication information is used to indicate the mode of the PDN connection of the terminal; and store the mode indication information.

Optionally, the third indication information and the K routing rules are carried in a create bearer request message or an update bearer request message.

The gateway device in this embodiment may be configured to execute the technical solution executed by the gateway device in the foregoing method embodiment shown in FIG. 14, or FIG. 16A and FIG. 16B, or FIG. 17A and FIG. 17B. An implementation principle and a technical effect thereof are similar, and are not further described herein.

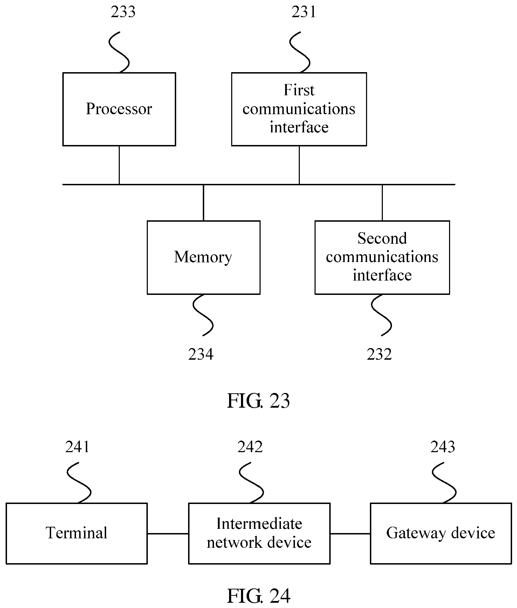

FIG. 23 is a schematic structural diagram of a gateway device according to Embodiment 6 of the present invention. As shown in FIG. 23, the gateway device in this embodiment may include a first communications interface 231, a second communications interface 232, a processor 233, and a memory 234. The memory 234 is configured to store program code for performing a method for routing rule transmission. The processor 233 is configured to invoke the program code in the memory 234 to perform:
receiving, by using the first communications interface 231, mode indication information sent by a PCRF, where the mode indication information is used to indicate a mode of a PDN connection of a terminal; if the mode indication information indicates that the PDN connection of the terminal is in a network-initiated NBIFOM mode, sending third indication information to an intermediate network device by using the second communications interface 232, where the third indication information is used to instruct the intermediate network device to send an acknowledgement message that does not carry any routing rule to the terminal, or the third indication information is used to indicate that a feedback of the terminal is required for an NBIFOM container sent by the intermediate network device, or the third indication information is used to instruct the intermediate network device to send an NBIFOM container to the terminal by using a request message; receiving an NBIFOM routing rule request by using the second communications interface 232; and sending, according to the NBIFOM routing rule request, an NBIFOM container including K routing rules to the intermediate network device by using the second communications interface 232.

Optionally, the third indication information is carried in a create session response message and sent to the intermediate network device.

The gateway device in this embodiment may be configured to execute the technical solution executed by the gateway device in the foregoing method embodiment shown in FIG. 15, or FIG. 16A and FIG. 16B, or FIG. 17A and FIG. 17B. An implementation principle and a technical effect thereof are similar, and are not further described herein.

FIG. 24 is a schematic structural diagram of a system for routing rule transmission according to Embodiment 2 of the present invention. As shown in FIG. 24, the system in this embodiment includes a terminal 241, an intermediate network device 242, and a gateway device 243. The terminal 241 may use a structure of the terminal provided by Embodiment 1 or Embodiment 2 of the present invention, and the terminal 241 may correspondingly execute the technical solution executed by the terminal in each of the foregoing method embodiments of the present invention. An implementation principle and a technical effect thereof are similar, and are not further described herein. The intermediate network device 242 may use a structure of the intermediate network device provided by Embodiment 3 or Embodiment 4 of the present invention, and the intermediate network device 242 may correspondingly execute the technical solution executed by the intermediate network device in each of the foregoing method embodiments of the present invention. An implementation principle and a technical effect thereof are similar, and are not further described herein. The gateway device 243 may use a structure of the gateway device shown in any one of Embodiment 3 to Embodiment 6 of the present invention, and the gateway device 243 may correspondingly execute the technical solution executed by the gateway device in each of the foregoing method embodiments of the present invention. An implementation principle and a technical effect thereof are similar, and are not further described herein. It should be noted that, the terminal 241 communicates with the intermediate network device 242 through an access network (not shown in the figure). Depending on different access networks, the intermediate network device 242 also varies correspondingly.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a read-only memory (English: Read-Only Memory, ROM for short), a random access memory (English: Random Access Memory, RAM for short), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments without departing from the scope of the technical solutions of the embodiments of the present invention.

## Claims

1. A method for routing rule transmission, **characterized by** comprising:
receiving (S1301), by an intermediate network device, a network based IP flow mobility, NBIFOM, routing rule request from a terminal, and sending the NBIFOM routing rule request to a gateway device;
receiving (S1302), by the intermediate network device, an NBIFOM container comprising K routing rules from the gateway device, and sending the NBIFOM container comprising the K routing rules to the terminal, wherein K is an integer greater than or equal to 1 and each of the K routing rules comprises a routing filter, routing access technology information, a routing rule priority and a routing rule identifier; and
receiving (S1303), by the intermediate network device, routing rule acknowledgement indication information from the terminal, and sending the routing rule acknowledgement indication information to the gateway device, wherein the routing rule acknowledgement indication information comprises first indication information or second indication information, the first indication information indicates that the terminal accepts the K routing rules, and the second indication information indicates that the terminal rejects at least one of the K routing rules, as well as at least one of the following: identifiers of M routing rules acknowledged by the terminal in the K routing rules, and identifiers of N rejected routing rules, wherein a sum of M and N is equal to K,
wherein the sending, by the intermediate network device, the NBIFOM container comprising the K routing rules to the terminal further comprises:
if third indication information is received from the gateway device, sending, by the intermediate network device, a first request message to the terminal, wherein the first request message carries the NBIFOM container comprising the K routing rules, and the third indication information is used to instruct the intermediate network device to send an NBIFOM container to the terminal by using a request message.

2. The method according to claim 1, wherein the first request message is a request secondary packet data protocol, PDP, context activation message or a modify PDP context request message.

3. The method according to claims 1 or 2, wherein the method further comprises:
receiving, by the intermediate network device, the third indication information from the gateway device.

4. The method according to claim 3, wherein after the receiving, by the intermediate network device, the third indication information from the gateway device, the method further comprises:
storing, by the intermediate network device, the third indication information.

5. The method according to any one of claims 1 to 4, wherein the method further comprises:
sending, by the intermediate network device, an acknowledgement message to the terminal, wherein the acknowledgement message does not carry the NBIFOM container comprising the K routing rules, and the acknowledgement message is used to acknowledge reception of the NBIFOM routing rule request from the terminal.

6. A method for routing rule transmission, **characterized by** comprising:
receiving (S1501), by a gateway device, mode indication information from a policy and charging rules function, PCRF, wherein the mode indication information ,indicates a mode of a packet data network, PDN, connection of a terminal;
when the mode indication information indicates that the PDN connection of the terminal is in a network-initiated network based IP flow mobility, NBIFOM, mode, sending (S1502), by the gateway device, third indication information to an intermediate network device, wherein the third indication information is used to instruct the intermediate network device to send an NBIFOM container to the terminal by using a request message;
receiving (S1503), by the gateway device, an NBIFOM routing rule request from the intermediate network device;
sending (S1504), by the gateway device according to the NBIFOM routing rule request, an NBIFOM container comprising K routing rules to the intermediate network device, wherein K is an integer greater than or equal to 1 and each of the K routing rules comprises a routing filter, routing access technology information, a routing rule priority and a routing rule identifier; and
receiving, by the gateway device, a routing rule acknowledgement indication information from the intermediate network device, wherein the routing rule acknowledgement indication information comprises first indication information or second indication information, the first indication information indicates that the terminal accepts the K routing rules, and the second indication information indicates that the terminal rejects at least one of the K routing rules, as well as at least one of the following: identifiers of M routing rules acknowledged by the terminal in the K routing rules, and identifiers of N rejected routing rules, wherein a sum of M and N is equal to K,
wherein the third indication information is carried in a create session response message and sent to the intermediate network device.

7. An intermediate network device, **characterized by** comprising:
a receiving unit (181), configured to receive a network based IP flow mobility, NBIFOM, routing rule request from a terminal; and
a sending unit (182), configured to send the NBIFOM routing rule request received by the receiving unit (181) to a gateway device; wherein
the receiving unit (181) is further configured to receive an NBIFOM container comprising K routing rules from the gateway device, wherein K is an integer greater than or equal to 1 and each of the K routing rules comprises a routing filter, routing access technology information, a routing rule priority and a routing rule identifier;
the sending unit (182) is further configured to send the NBIFOM container comprising the K routing rules and received by the receiving unit (181) to the terminal;
the receiving unit (181) is further configured to receive routing rule acknowledgement indication information from the terminal, wherein the routing rule acknowledgement indication information comprises first indication information or second indication information, the first indication information indicates that the terminal accepts the K routing rules, and the second indication information indicates that the terminal rejects at least one of the K routing rules, as well as at least one of the following: identifiers of M routing rules acknowledged by the terminal in the K routing rules, and identifiers of N rejected routing rules, wherein a sum of M and N is equal to K; and
the sending unit (182) is further configured to send the routing rule acknowledgement indication information received by the receiving unit (181) to the gateway device,
wherein the receiving unit (181) is further configured to receive the third indication information from the gateway device, and
the intermediate network device further comprises a storage unit (184), configured to store, after the receiving unit (181) receives the third indication information from the gateway device, the third indication information received by the receiving unit (181).

8. The intermediate network device according to claim 7, further comprising:
a determining unit (183), configured to determine whether third indication information is received from the gateway device, wherein the third indication information is used to instruct the intermediate network device to send an NBIFOM container to the terminal by using a request message; wherein
if the determining unit (183) determines that the third indication information is received from the gateway device, the sending unit (182) is further configured to send a first request message to the terminal, wherein the first request message carries the NBIFOM container comprising the K routing rules.

9. The intermediate network device according to claim 8, wherein the first request message is a request secondary packet data protocol, PDP, context activation message or a modify PDP context request message.

10. The intermediate network device according to any one of claims 7 to 9, wherein the sending unit (182) is further configured to send an acknowledgement message to the terminal, wherein the acknowledgement message does not carry the NBIFOM container comprising the K routing rules, and the acknowledgement message is used to acknowledge reception of the NBIFOM routing rule request sent by the terminal.

11. A gateway device, **characterized by** comprising:
a receiving unit (201), configured to receive mode indication information from a policy and charging rules function, PCRF, wherein the mode indication information indicates a mode of a packet data network, PDN, connection of a terminal; and
a sending unit (202), configured to send third indication information to an intermediate network device if the mode indication information received by the receiving unit (201) indicates that the PDN connection of the terminal is in a network-initiated network based IP flow mobility NBIFOM mode, wherein the third indication information is used to instruct the intermediate network device to send an NBIFOM container to the terminal by using a request message; wherein
the receiving unit (201) is further configured to receive an NBIFOM routing rule request from the intermediate network device;
the sending unit (202) is further configured to send, according to the NBIFOM routing rule request received by the receiving unit (201), an NBIFOM container comprising K routing rules to the intermediate network device, wherein K is an integer greater than or equal to 1 and each of the K routing rules comprises a routing filter, routing access technology information, a routing rule priority and a routing rule identifier; and
the receiving unit (201) is further configured to receive routing rule acknowledgement indication information from the intermediate network device, wherein the routing rule acknowledgement indication information comprises first indication information or second indication information, the first indication information indicates that the terminal accepts the K routing rules, and the second indication information indicates that the terminal rejects at least one of the K routing rules, as well as at least one of the following: identifiers of M routing rules acknowledged by the terminal in the K routing rules, and identifiers of N rejected routing rules, wherein a sum of M and N is equal to K

## Patentansprüche

1. Verfahren für eine Routingregelübertragung, **dadurch gekennzeichnet, dass** es Folgendes umfasst:
Empfangen (S1301) einer netzwerkbasierten IP-Flussmobilitäts(NBIFOM)-Routingregelanforderung durch eine Zwischennetzwerkvorrichtung von einem Endgerät und Senden der NBIFOM-Routingregelanforderung an eine Gatewayvorrichtung;
Empfangen (S1302) eines NBIFOM-Containers, der K Routingregeln umfasst, durch die Zwischennetzwerkvorrichtung von der Gatewayvorrichtung und Senden des NBIFOM-Containers, der K Routingregeln umfasst, an das Endgerät, wobei K eine Ganzzahl größer als oder gleich 1 ist und jede der K Routingregeln einen Routingfilter, Routingzugriffstechnologieinformationen, eine Routingregelpriorität und eine Routingregelkennung umfasst; und
Empfangen (S1303) von Routingregelbestätigungsanzeigeinformationen durch die Zwischennetzwerkvorrichtung vom Endgerät und Senden der Routingregelbestätigungsanzeigeinformationen an die Gatewayvorrichtung, wobei die Routingregelbestätigungsanzeigeinformationen erste Anzeigeinformationen oder zweite Anzeigeinformationen umfassen, wobei die ersten Anzeigeinformationen anzeigen, dass das Endgerät die K Routingregeln akzeptiert, und die zweiten Anzeigeinformationen anzeigen, dass das Endgerät mindestens eine der K Routingregeln ablehnt, sowie mindestens eines von Folgendem: Kennungen von M Routingregeln, die vom Endgerät in den K Routingregeln bestätigt wurden, und Kennungen von N abgelehnten Routingregeln, wobei eine Summe von M und N gleich K ist,
wobei das Senden des NBIFOM-Containers, der die K Routingregeln umfasst, durch die Zwischennetzwerkvorrichtung an das Endgerät ferner Folgendes umfasst:
wenn dritte Anzeigeinformationen von der Gatewayvorrichtung empfangen werden, Senden einer ersten Anforderungsnachricht durch die Zwischennetzwerkvorrichtung an das Endgerät, wobei die erste Anforderungsnachricht den NBIFOM-Container, der die K Routingregeln umfasst, enthält und die dritten Anzeigeinformationen verwendet werden, um die Zwischennetzwerkvorrichtung anzuweisen, den NBIFOM-Container unter Verwendung einer Anforderungsnachricht an das Endgerät zu senden.

2. Verfahren nach Anspruch 1, wobei die erste Anforderungsnachricht eine Nachricht zum Anfordern der Aktivierung von sekundärem Paketdatenprotokoll(PDP)-Kontext oder eine Anforderungsnachricht zum Modifizieren von PDP-Kontext ist.

3. Verfahren nach Anspruch 1 oder 2, wobei das Verfahren ferner Folgendes umfasst: Empfangen der dritten Anzeigeinformationen durch die Zwischennetzwerkvorrichtung von der Gatewayvorrichtung.

4. Verfahren nach Anspruch 3, wobei das Verfahren nach dem Empfangen der dritten Anzeigeinformationen durch die Zwischennetzwerkvorrichtung von der Gatewayvorrichtung ferner Folgendes umfasst:
Speichern der dritten Anzeigeinformationen durch die Zwischennetzwerkvorrichtung.

5. Verfahren nach einem der Ansprüche 1 bis 4, wobei das Verfahren ferner Folgendes umfasst:
Senden einer Bestätigungsnachricht durch die Zwischennetzwerkvorrichtung an das Endgerät, wobei die Bestätigungsnachricht den NBIFOM-Container, der die K Routingregeln umfasst, nicht enthält und die Bestätigungsnachricht verwendet wird, um den Empfang der NBIFOM-Routingregelanforderung vom Endgerät zu bestätigen.

6. Verfahren für eine Routingregelübertragung, **dadurch gekennzeichnet, dass** es Folgendes umfasst:
Empfangen (S1501) von Modusanzeigeinformationen durch eine Gatewayvorrichtung von einer Richtlinien- und Abrechnungsregelfunktion, PCRF, wobei die Modusanzeigeinformationen einen Modus einer Paketdatennetzwerk(PDN)-Verbindung eines Endgeräts anzeigen;
wenn die Modusanzeigeinformationen anzeigen, dass sich die PDN-Verbindung des Endgeräts in einem netzwerkinitiierten netzwerkbasierten IP-Flussmobilitäts(NBIFOM)-Modus befindet, Senden (S1502) von dritten Anzeigeinformationen durch die Gatewayvorrichtung an eine Zwischennetzwerkvorrichtung, wobei die dritten Anzeigeinformationen verwendet werden, um die Zwischennetzwerkvorrichtung anzuweisen, einen NBIFOM-Container unter Verwendung einer Anforderungsnachricht an das Endgerät zu senden;
Empfangen (S1503) einer NBIFOM-Routingregelanforderung durch die Gatewayvorrichtung von der Zwischennetzwerkvorrichtung;
Senden (S1504) eines NBIFOM-Containers, der K Routingregeln umfasst, durch die Gatewayvorrichtung gemäß der NBIFOM-Routingregelanforderung an die Zwischennetzwerkvorrichtung, wobei K eine Ganzzahl größer als oder gleich 1 ist und jede der K Routingregeln einen Routingfilter, Routingzugriffstechnologieinformationen, eine Routingregelpriorität und eine Routingregelkennung umfasst; und
Empfangen einer Routingregelbestätigungsanzeigeinformation durch die Gatewayvorrichtung von der Zwischennetzwerkvorrichtung, wobei die Routingregelbestätigungsanzeigeinformationen erste Anzeigeinformationen oder zweite Anzeigeinformationen umfassen, wobei die ersten Anzeigeinformationen anzeigen, dass das Endgerät die K Routingregeln akzeptiert, und die zweiten Anzeigeinformationen anzeigen, dass das Endgerät mindestens eine der K Routingregeln ablehnt, sowie mindestens eines von Folgendem: Kennungen von M Routingregeln, die vom Endgerät in den K Routingregeln bestätigt wurden, und Kennungen von N abgelehnten Routingregeln, wobei eine Summe von M und N gleich K ist,
wobei die dritten Anzeigeinformationen in einer Sitzungseinrichtungsantwortnachricht enthalten sind und an die Zwischennetzwerkvorrichtung gesendet werden.

7. Zwischennetzwerkvorrichtung, **dadurch gekennzeichnet, dass** sie Folgendes umfasst:
eine Empfangseinheit (181), die dazu ausgelegt ist, eine netzwerkbasierte IP-Flussmobilitäts(NBIFOM)-Routingregelanforderung von einem Endgerät zu empfangen; und
eine Sendeeinheit (182), die dazu ausgelegt ist, die NBIFOM-Routingregelanforderung, die von der Empfangseinheit (181) empfangen wurde, an eine Gatewayvorrichtung zu senden; wobei
die Empfangseinheit (181) ferner dazu ausgelegt ist, einen NBIFOM-Container, der K Routingregeln umfasst, von der Gatewayvorrichtung zu empfangen, wobei K eine Ganzzahl größer als oder gleich 1 ist und jede der K Routingregeln einen Routingfilter, Routingzugriffstechnologieinformationen, eine Routingregelpriorität und eine Routingregelkennung umfasst;
die Sendeeinheit (182) ferner dazu ausgelegt ist, den NBIFOM-Container, der die K Routingregeln umfasst und von der Empfangseinheit (181) empfangen wurde, an das Endgerät zu senden;
die Empfangseinheit (181) ferner dazu ausgelegt ist, Routingregelbestätigungsanzeigeinformationen vom Endgerät zu empfangen, wobei die Routingregelbestätigungsanzeigeinformationen erste Anzeigeinformationen oder zweite Anzeigeinformationen umfassen, wobei die ersten Anzeigeinformationen anzeigen, dass das Endgerät die K Routingregeln akzeptiert, und die zweiten Anzeigeinformationen anzeigen, dass das Endgerät mindestens eine der K Routingregeln ablehnt, sowie mindestens eines von Folgendem: Kennungen von M Routingregeln, die vom Endgerät in den K Routingregeln bestätigt wurden, und Kennungen von N abgelehnten Routingregeln, wobei eine Summe von M und N gleich K ist; und
die Sendeeinheit (182) ferner dazu ausgelegt ist, die Routingregelbestätigungsanzeigeinformationen, die von der Empfangseinheit (181) empfangen wurden, an die Gatewayvorrichtung zu senden,
wobei die Empfangseinheit (181) ferner dazu ausgelegt ist, die dritten Anzeigeinformationen von der Gatewayvorrichtung zu empfangen, und
die Zwischennetzwerkvorrichtung ferner eine Speichereinheit (184) umfasst, die dazu ausgelegt ist, nachdem die Empfangseinheit (181) die dritten Anzeigeinformationen von der Gatewayvorrichtung empfangen hat, die dritten Anzeigeinformationen, die von der Empfangseinheit (181) empfangen wurden, zu speichern.

8. Zwischennetzwerkvorrichtung nach Anspruch 7, die ferner Folgendes umfasst:
eine Bestimmungseinheit (183), die dazu ausgelegt ist zu bestimmen, ob dritte Anzeigeinformationen von der Gatewayvorrichtung empfangen wurden, wobei die dritten Anzeigeinformationen verwendet werden, um die Zwischennetzwerkvorrichtung anzuweisen, den NBIFOM-Container unter Verwendung einer Anforderungsnachricht an das Endgerät zu senden; wobei wenn die Bestimmungseinheit (183) bestimmt, dass die dritten Anzeigeinformationen von der Gatewayvorrichtung empfangen wurden, die Sendeeinheit (182) ferner dazu ausgelegt ist, eine erste Anforderungsnachricht an das Endgerät zu senden, wobei die erste Anforderungsnachricht den NBIFOM-Container, der die K Routingregeln umfasst, enthält.

9. Zwischennetzwerkvorrichtung nach Anspruch 8, wobei die erste Anforderungsnachricht eine Nachricht zum Anfordern der Aktivierung von sekundärem Paketdatenprotokoll(PDP)-Kontext oder eine Anforderungsnachricht zum Modifizieren von PDP-Kontext ist.

10. Zwischennetzwerkvorrichtung nach einem der Ansprüche 7 bis 9, wobei die Sendeeinheit (182) ferner dazu ausgelegt ist, eine Bestätigungsnachricht an das Endgerät zu senden, wobei die Bestätigungsnachricht den NBIFOM-Container, der die K Routingregeln umfasst, nicht enthält und die Bestätigungsnachricht verwendet wird, um den Empfang der NBIFOM-Routingregelanforderung, die vom Endgerät gesendet wurde, zu bestätigen.

11. Gatewayvorrichtung, **dadurch gekennzeichnet, dass** sie Folgendes umfasst:
eine Empfangseinheit (201), die dazu ausgelegt ist, Modusanzeigeinformationen von einer Richtlinien- und Abrechnungsregelfunktion, PCRF, zu empfangen, wobei die Modusanzeigeinformationen einen Modus einer Paketdatennetzwerk(PDN)-Verbindung eines Endgeräts anzeigen; und
eine Sendeeinheit (202), die dazu ausgelegt ist, dritte Anzeigeinformationen an eine Zwischennetzwerkvorrichtung zu senden, wenn die Modusanzeigeinformationen, die von der Empfangseinheit (201) empfangen wurden, anzeigen, dass sich die PDN-Verbindung des Endgeräts in einem netzwerkinitiierten netzwerkbasierten IP-Flussmobilitäts(NBIFOM)-Modus befindet, wobei die dritten Anzeigeinformationen verwendet werden, um die Zwischennetzwerkvorrichtung anzuweisen, einen NBIFOM-Container unter Verwendung einer Anforderungsnachricht an das Endgerät zu senden; wobei
die Empfangseinheit (201) ferner dazu ausgelegt ist, eine NBIFOM-Routingregelanforderung von der Zwischennetzwerkvorrichtung zu empfangen;
die Sendeeinheit (202) ferner dazu ausgelegt ist, einen NBIFOM-Container, der K Routingregeln umfasst, gemäß der NBIFOM-Routingregelanforderung, die von der Empfangseinheit (201) empfangen wurde, an die Zwischennetzwerkvorrichtung zu senden, wobei K eine Ganzzahl größer als oder gleich 1 ist und jede der K Routingregeln einen Routingfilter, Routingzugriffstechnologieinformationen, eine Routingregelpriorität und eine Routingregelkennung umfasst; und
die Empfangseinheit (201) ferner dazu ausgelegt ist, Routingregelbestätigungsanzeigeinformationen von der Zwischennetzwerkvorrichtung zu empfangen, wobei die Routingregelbestätigungsanzeigeinformationen erste Anzeigeinformationen oder zweite Anzeigeinformationen umfassen, wobei die ersten Anzeigeinformationen anzeigen, dass das Endgerät die K Routingregeln akzeptiert, und die zweiten Anzeigeinformationen anzeigen, dass das Endgerät mindestens eine der K Routingregeln ablehnt, sowie mindestens eines von Folgendem: Kennungen von M Routingregeln, die vom Endgerät in den K Routingregeln bestätigt wurden, und Kennungen von N abgelehnten Routingregeln, wobei eine Summe von M und N gleich K ist.

## Revendications

1. Procédé pour une transmission de règles de routage, **caractérisé en ce qu'**il consiste :
à recevoir (S1301), au moyen d'un dispositif de réseau intermédiaire, une demande de règles de routage de mobilité de flux IP basée sur le réseau (NBIFOM) en provenance d'un terminal et à envoyer la demande de règles de routage de mobilité NBIFOM à un dispositif de passerelle ;
à recevoir (S1302), au moyen du dispositif de réseau intermédiaire, un conteneur de mobilité NBIFOM comprenant K règles de routage en provenance du dispositif de passerelle et à envoyer le conteneur de mobilité NBIFOM comprenant les K règles de routage au terminal, dans lequel K est un nombre entier supérieur ou égal à 1 et chacune des K règles de routage comprend un filtre de routage, des informations de technologie d'accès à un routage, une priorité de règle de routage et un identifiant de règle de routage ; et
à recevoir (S1303), au moyen du dispositif de réseau intermédiaire, des informations d'indication d'accusé de réception de règles de routage en provenance du terminal et à envoyer les informations d'indication d'accusé de réception de règles de routage au dispositif de passerelle, dans lequel les informations d'indication d'accusé de réception de règles de routage comportent des premières informations d'indication ou des deuxièmes informations d'indication, les premières informations d'indication indiquent que le terminal accepte les K règles de routage et les deuxièmes informations d'indication indiquent que le terminal rejette au moins l'une des K règles de routage ainsi qu'au moins l'un des identifiants suivants : des identifiants de M règles de routage reconnues par le terminal dans les K règles de routage et des identifiants de N règles de routage rejetées, dans lequel une somme de M et de N est égale à K ;
dans lequel l'envoi, par le dispositif de réseau intermédiaire, du conteneur de mobilité NBIFOM comprenant les K règles de routage au terminal consiste en outre :
si des troisièmes informations d'indication sont reçues en provenance du dispositif de passerelle, à envoyer, au moyen du dispositif de réseau intermédiaire, un premier message de demande au terminal, dans lequel le premier message de demande comporte le conteneur de mobilité NBIFOM comprenant les K règles de routage et les troisièmes informations d'indication sont utilisées pour donner comme instruction au dispositif de réseau intermédiaire d'envoyer un conteneur de mobilité NBIFOM au terminal en utilisant un message de demande.

2. Procédé selon la revendication 1, dans lequel le premier message de demande est un message d'activation de contexte de protocole de données par paquets (PDP) secondaire de demande ou un message de demande de contexte de protocole PDP de modification.

3. Procédé selon la revendication 1 ou 2, le procédé consistant en outre :
à recevoir, au moyen du dispositif de réseau intermédiaire, les troisièmes informations d'indication en provenance du dispositif de passerelle.

4. Procédé selon la revendication 3, le procédé consistant en outre, après la réception, par le dispositif de réseau intermédiaire, des troisièmes informations d'indication en provenance du dispositif de passerelle :
à stocker, au moyen du dispositif de réseau intermédiaire, les troisièmes informations d'indication.

5. Procédé selon l'une quelconque des revendications 1 à 4, le procédé consistant en outre :
à envoyer, au moyen du dispositif de réseau intermédiaire, un message d'accusé de réception au terminal, dans lequel le message d'accusé de réception ne comporte pas le conteneur de mobilité NBIFOM comprenant les K règles de routage et le message d'accusé de réception est utilisé pour accuser réception de la demande de règles de routage de mobilité NBIFOM en provenance du terminal.

6. Procédé pour une transmission de règles de routage, **caractérisé en ce qu'**il consiste :
à recevoir (S1501), au moyen d'un dispositif de passerelle, des informations d'indication de mode en provenance d'une fonction de règles de facturation et de politique (PCRF), dans lequel les informations d'indication de mode indiquent un mode d'une connexion de réseau de données par paquets (PDN) d'un terminal ;
lorsque les informations d'indication de mode indiquent que la connexion de réseau PDN du terminal est dans un mode de mobilité de flux IP basée sur le réseau (NBIFOM) initié par le réseau, à envoyer (S1502), au moyen du dispositif de passerelle, des troisièmes informations d'indication à un dispositif de réseau intermédiaire, dans lequel les troisièmes informations d'indication sont utilisées pour donner comme instruction au dispositif de réseau intermédiaire d'envoyer un conteneur de mobilité NBIFOM au terminal en utilisant un message de demande ;
à recevoir (S1503), au moyen du dispositif de passerelle, une demande de règles de routage de mobilité NBIFOM en provenance du dispositif de réseau intermédiaire ;
à envoyer (S1504), au moyen du dispositif de passerelle, en fonction de la demande de règles de routage de mobilité NBIFOM, un conteneur de mobilité NBIFOM comprenant K règles de routage au dispositif de réseau intermédiaire, dans lequel K est un nombre entier supérieur ou égal à 1 et chacune des K règles de routage comprend un filtre de routage, des informations de technologie d'accès à un routage, une priorité de règle de routage et un identifiant de règle de routage ; et
à recevoir, au moyen du dispositif de passerelle, une information d'indication d'accusé de réception de règles de routage en provenance du dispositif de réseau intermédiaire, dans lequel l'information d'indication d'accusé de réception de règles de routage comporte des premières informations d'indication ou des deuxièmes informations d'indication, les premières informations d'indication indiquent que le terminal accepte les K règles de routage et les deuxièmes informations d'indication indiquent que le terminal rejette au moins l'une des K règles de routage ainsi qu'au moins l'un des identifiants suivants : des identifiants de M règles de routage reconnues par le terminal dans les K règles de routage et des identifiants de N règles de routage rejetées, dans lequel une somme de M et de N est égale à K,
dans lequel les troisièmes informations d'indication sont transportées dans un message de réponse de session de création et envoyées au dispositif de réseau intermédiaire.

7. Dispositif de réseau intermédiaire, **caractérisé en ce qu'**il comprend :
une unité de réception (181), configurée pour recevoir une demande de règles de routage de mobilité de flux IP basée sur le réseau (NBIFOM) en provenance d'un terminal ; et
une unité d'envoi (182), configurée pour envoyer la demande de règles de routage de mobilité NBIFOM reçue par l'unité de réception (181) à un dispositif de passerelle ;
dans lequel
l'unité de réception (181) est en outre configurée pour recevoir un conteneur de mobilité NBIFOM comprenant K règles de routage en provenance du dispositif de passerelle, dans lequel K est un nombre entier supérieur ou égal à 1 et chacune des K règles de routage comprend un filtre de routage, des informations de technologie d'accès à un routage, une priorité de règle de routage et un identifiant de règle de routage ;
l'unité d'envoi (182) est en outre configurée pour envoyer le conteneur de mobilité NBIFOM comprenant les K règles de routage et reçu par l'unité de réception (181) au terminal ;
l'unité de réception (181) est en outre configurée pour recevoir des informations d'indication d'accusé de réception de règles de routage en provenance du terminal, dans lequel les informations d'indication d'accusé de réception de règles de routage comportent des premières informations d'indication ou des deuxièmes informations d'indication, les premières informations d'indication indiquent que le terminal accepte les K règles de routage et les deuxièmes informations d'indication indiquent que le terminal rejette au moins l'une des K règles de routage ainsi qu'au moins l'un des identifiants suivants : des identifiants de M règles de routage reconnues par le terminal dans les K règles de routage et des identifiants de N règles de routage rejetées, dans lequel une somme de M et de N est égale à K ; et
l'unité d'envoi (182) est en outre configurée pour envoyer les informations d'indication d'accusé de réception de règles de routage reçues par l'unité de réception (181) au dispositif de passerelle,
dans lequel l'unité de réception (181) est en outre configurée pour recevoir les troisièmes informations d'indication en provenance du dispositif de passerelle, et
le dispositif de réseau intermédiaire comprend en outre une unité de stockage (184), configurée pour stocker, après que l'unité de réception (181) a reçu les troisièmes informations d'indication en provenance du dispositif de passerelle, les troisièmes informations d'indication reçues par l'unité de réception (181).

8. Dispositif de réseau intermédiaire selon la revendication 7, comprenant en outre :
une unité de détermination (183), configurée pour déterminer si des troisièmes informations d'indication sont reçues en provenance du dispositif de passerelle, dans lequel les troisièmes informations d'indication sont utilisées pour donner comme instruction au dispositif de réseau intermédiaire d'envoyer un conteneur de mobilité NBIFOM au terminal en utilisant un message de demande ; dans lequel si l'unité de détermination (183) détermine que les troisièmes informations d'indication sont reçues en provenance du dispositif de passerelle, l'unité d'envoi (182) est en outre configurée pour envoyer un premier message de demande au terminal, dans lequel le premier message de demande comporte le conteneur de mobilité NBIFOM comprenant les K règles de routage.

9. Dispositif de réseau intermédiaire selon la revendication 8, dans lequel le premier message de demande est un message d'activation de contexte de protocole de données par paquets (PDP) secondaire de demande ou un message de demande de contexte de protocole PDP de modification.

10. Dispositif de réseau intermédiaire selon l'une quelconque des revendications 7 à 9, dans lequel l'unité d'envoi (182) est en outre configurée pour envoyer un message d'accusé de réception au terminal, dans lequel le message d'accusé de réception ne comporte pas le conteneur de mobilité NBIFOM comprenant les K règles de routage et le message d'accusé de réception est utilisé pour accuser réception de la demande de règles de routage de mobilité NBIFOM envoyée par le terminal.

11. Dispositif de passerelle, **caractérisé en ce qu'**il comprend :
une unité de réception (201), configurée pour recevoir des informations d'indication de mode en provenance d'une fonction de règles de facturation et de politique (PCRF), dans lequel les informations d'indication de mode indiquent un mode d'une connexion de réseau de données par paquets (PDN) d'un terminal ; et
une unité d'envoi (202), configurée pour envoyer des troisièmes informations d'indication à un dispositif de réseau intermédiaire si les informations d'indication de mode reçues par l'unité de réception (201) indiquent que la connexion de réseau PDN du terminal est dans un mode de mobilité de flux IP basée sur le réseau (NBIFOM) initié par le réseau, dans lequel les troisièmes informations d'indication sont utilisées pour donner comme instruction au dispositif de réseau intermédiaire d'envoyer un conteneur de mobilité NBIFOM au terminal en utilisant un message de demande ; dans lequel
l'unité de réception (201) est en outre configurée pour recevoir une demande de règles de routage de mobilité NBIFOM en provenance du dispositif de réseau intermédiaire ;
l'unité d'envoi (202) est en outre configurée pour envoyer, en fonction de la demande de règles de routage de mobilité NBIFOM reçue par l'unité de réception (201), un conteneur de mobilité NBIFOM comprenant K règles de routage au dispositif de réseau intermédiaire, dans lequel K est un nombre entier supérieur ou égal à 1 et chacune des K règles de routage comprend un filtre de routage, des informations de technologie d'accès à un routage, une priorité de règle de routage et un identifiant de règle de routage ; et
l'unité de réception (201) est en outre configurée pour recevoir des informations d'indication d'accusé de réception de règles de routage en provenance du dispositif de réseau intermédiaire, dans lequel les informations d'indication d'accusé de réception de règles de routage comportent des premières informations d'indication ou des deuxièmes informations d'indication, les premières informations d'indication indiquent que le terminal accepte les K règles de routage et les deuxièmes informations d'indication indiquent que le terminal rejette au moins l'une des K règles de routage ainsi qu'au moins l'un des identifiants suivants : des identifiants de M règles de routage reconnues par le terminal dans les K règles de routage et des identifiants de N règles de routage rejetées, dans lequel une somme de M et de N est égale à K.
